# EUROPÄISCHE PATENTSCHRIFT

(11) **EP 1 157 256 B1**
(45) Veröffentlichungstag und Bekanntmachung des Hinweises auf die Patenterteilung: **06.05.2004**
(21) Anmeldenummer: 00922432.0
(22) Anmeldetag: 10.03.2000
(51) Int. Cl.: G01D 5/14, G01D 5/16

(54) **LÄNGENMESSSYSTEM MIT MINDESTENS EINEM MAGNETISCHEN MASSSTAB**
LENGTH MEASUREMENT SYSTEM WITH AT LEAST ONE MAGNETIC MEASURING ROD
SYSTEME DE MESURE DE LONGUEUR COMPRENANT AU MOINS UNE BARRE DE MESURE MAGNETIQUE

(30) Priorität: 10.03.1999 DE 19910636
(43) Veröffentlichungstag der Anmeldung: 28.11.2001
(73) Patentinhaber: Brose Fahrzeugteile GmbH & Co. KG, Coburg, 96450 Coburg (DE)
(72) Erfinder: DETTMANN, Fritz, D-35586 Wetzlar (DE); LOREIT, Uwe, D-35580 Wetzlar (DE); BISCHOFF, Heike, D-96450 Coburg (DE); DOHLES, Hilmar, D-96274 Itzgrund (DE)
(74) Vertreter: Baumgärtel, Gunnar, Dr.
(86) Internationale Anmeldenummer: PCT/DE2000/000788
(87) Internationale Veröffentlichungsnummer: WO 2000/054010

(56) Entgegenhaltungen:
- EP-A- 0 482 341
- DE-A- 19 729 312
- "MANCHES IST NUN MACHBAR" ELEKTROTECHNIK,DE,VOGEL VERLAG K.G. WURZBURG, Bd. 73, Nr. 4, 2. April 1991 (1991-04-02), Seiten 76,78-79, XP000227652 ISSN: 1431-9578

## Beschreibung

Die Erfindung betrifft ein Längenmeßsystem, bestehend aus einem oder mehreren magnetischen Maßstäben nach dem Oberbegriff des Anspruchs 1.

Die Erfindung bezieht sich dabei insbesondere auf ein magnetisches Längenmeßsystem, wie es beispielsweise zur automatischen Bestimmung von Positionen, Längen und Abständen besonders unter rauhen Umgebungsbedingungen im Maschinenbau oder in der Automobiltechnik eingesetzt wird.

Magnetische Längenmeßsysteme sind bekannt. Sie bestehen aus einer Magnetanordnung, und aus einem oder mehreren Magnetfeldsensoren, die eine Komponente der Magnetfeldstärke oder die Magnetfeldrichtung anzeigen. Im einfachsten Fall wird die Magnetanordnung durch einen einfachen Stabmagneten und ein Magnetfeldsensor durch einen magnetoresistiven Sensor gebildet, dessen Ausgangsspannung von der Feldrichtung bestimmt wird, wie in dem Artikel "The magnetoresistive sensor" von A. Petersen in Electronic Components and Application 8 (1988) No.4, 222 - 239 beschrieben. Der Sensor wird in einem bestimmten Abstand zum Magneten parallel zu dessen Nord-Süd-Ausdehnung geführt, die auch die Meßrichtung ist. Die Sensorebene erstreckt sich in Meßrichtung und radial zur Achse des Magneten.

Ein Stabmagnet mit in Längsrichtung eingestellter Magnetisierung, dessen Länge nicht wesentlich größer als die doppelte Breite und Dicke ist, erzeugt ein Magnetfeld, dessen Winkel zur Parallelen der Längsrichtung in Meßrichtung von der Magnetmitte her mit zunehmender Distanz etwa linear zunimmt. Die Magnetisierung im magnetoresistiven Sensor liegt in der Schichtebene und stellt sich bei genügend hoher Feldstärke in Richtung des Feldes ein. Das Ausgangssignal des magnetoresistiven Sensors ändert sich dann proportional zum Sinus des doppelten Winkels. Da der sin(x) für kleine Winkel nur geringfügig von x abweicht, ergibt sich ein Längenbereich, in dem die Ausgangsspannung des Sensors proportional zur Position ist. Bezüglich der Genauigkeit hat diese einfachste Anordnung mehrere Nachteile, die teils durch die Magnetfeldverteilung des Stabmagneten und teils durch die Eigenschaften des magnetoresistiven Sensors bedingt sind.

Die störende starke Temperaturabhängigkeit des Ausgangssignales von magnetoresistiven Sensoren und die Begrenzung auf kleine Winkelabweichungen von der Parallelen zur Nord-Süd-Richtung des Magneten und damit auf Messlängen, die wesentlich kleiner als die Magnetlänge sind, wird bereits mit der im Patent DE 195 21 617 angegebenen Anordnung aufgehoben. Hier werden zwei auf einem Chip integrierte magnetoresistive Sensorbrücken benutzt, die sowohl ein dem Sinus als auch ein dem Kosinus des doppelten Winkels der Feldrichtung proportionales Ausgangssignal liefern. Durch Quotientenbildung entfällt die Temperatur abhängige Amplitude, und aus dem so erhaltenen Arcustangens kann der Winkel ohne Näherung über der gesamten Magnetlänge ermittelt werden. Damit resultieren hier die Meßfehler hauptsächlich nur noch daraus, daß es Abweichungen vom linearen Zusammenhang zwischen Winkel und Position gibt. Diese Abweichungen sind aber für Magnete mit großen Längen im Vergleich mit der Breite und Dicke ganz erheblich. Außerdem ist die Feldstärke über dem mittleren Teil eines langen Magneten nur sehr gering, so daß die Ausrichtung der Magnetisierung in den Widerstandsstreifen der magnetoresistiven Sensoren nicht mehr gegeben ist.

Deshalb werden zur Messung großer Strecken Maßstäbe benutzt, die aus abwechselnd in positiver und negativer Längsrichtung magnetisierten Bereichen gleicher Länge bestehen, wie auch in DE 195 21 617 angegeben. Die Längenbestimmung geschieht dann durch Zählen der von einer Anfangsposition her bereits passierten magnetisierten Bereiche und Addition des Anteiles eines Bereiches, der aus der Winkelbestimmung resultiert. Allerdings ist damit die Information über die absolute Position nicht mehr möglich, das heißt nach einer Störung des Meßsystems muß auf die Anfangsposition zurückgefahren werden, um den Zählvorgang zu wiederholen.

Zur Bestimmung der Absolutposition kann auch eine Kodierung des Maßstabes erfolgen, bei der jedoch unterschiedlich lange gleichmäßig magnetisierte Bereiche benutzt werden müssen, was wieder den oben bereits genannten Nachteil der geringen Feldstärke nahe des mittleren Teiles des Bereiches zur Folge hat, wenn mehrere Bereiche mit dem gleichen Codewert nebeneinander liegen. Mit der im EP 0 482 341 beschriebenen Anordnung von Doppelspuren mit jeweils entgegengesetzter Magnetisierung, deren Richtung immer quer zur Meßrichtung steht, kann dieses Problem jedoch umgangen werden. Leider ist aber in dem genannten Patent keine Anordnung zur Herstellung der benötigten Doppelspurmaßstäbe angegeben, und die bekannten Magnetisierverfahren liefern keine befriedigenden Ergebnisse für die Doppelspur.

Aus mehreren Teilen zusammengesetzte Magnetanordnungen zur Positionsbestimmung werden in der Offenlegungsschrift DE 31 06 613 vorgeschlagen. Sie sind dazu vorgesehen, über ganz bestimmte, geringe Weglängen hohe Ortsauflösungen in der Positionsbestimmung zu erreichen. Nachteilig bei allen verschiedenen angegebenen Anordnungen ist die äußerst starke Abhängigkeit der Ausgangssignale vom Abstand zwischen Magnet und Sensor, die sehr aufwendige Führungen bei der hochauflösenden Positionsmessung erforderlich macht und hohe Kosten bei Justierung und Eichung bewirkt.

In der DE 197 29 312 A1 ist ein absolutes magnetisches Längenmeßsystem beschrieben, das eine Codespur auf einem Maßstab und mehrere Sensoren zur Abtastung der über der Codespur vorhandenen Magnetfelder enthält. Dabei ist ein binärer Zustand eines Codeelementes in der Codespur durch eine gleichmäßige Magnetisierung und der andere binäre Zustand durch einen Wechsel der Magnetisierungsrichtung dargestellt. Diese durch binäre Zustände eines Codeelementes definierte Codespur wird durch mehrere magnetoresestive Sensoren abgetastet, aus deren Ausgangssignalen sich die Positionen der Sensoren bezüglich der Codespur bestimmen läßt. Hierzu sind jedoch stets mehrere Sensoren erforderlich.

In der Zeitschrift "Elektrotechnik", 370, H. Ziffer 4 vom 4. April 1991 ist ein Überblick über die Verwendung verschiedener Werkstoffe zur Herstellung von Dauermagneten unterschiedlicher Magnetisierung gegeben.

Der Erfindung liegt das Problem zugrunde, ein Längenmeßsystem mit einem magnetischen Maßstab anzugeben, das sich durch einen einfachen Aufbau auszeichnet.

Diese Aufgabe wird mit dem im Anspruch 1 charakterisierten Längenmeßsystem gelöst.

Entsprechend dem Anspruch 1 besteht das Längenmeßsystem aus mindestens einem magnetischen Maßstab, bei dem eine wesentliche Komponente der Magnetisierung oder die Magnetisierung insgesamt (im wesentlichen) in einer Ebene liegt, die sich senkrecht zur Meßrichtung ausdehnt, und einem oder mehreren Magnetfeldsensoren, wobei sich der Winkel der Komponente der Magnetisierung bzw. der Magnetisierung insgesamt bezüglich einer frei wählbaren Vorzugsrichtung (Referenzrichtung) in dieser Ebene entlang der Meßrichtung verändert. D.h., die Richtung der Komponente der Magnetisierung ist entlang der Meßrichtung gedreht, und zwar um eine Achse die entlang der Meßrichtung verläuft. Dabei ist jeder Längsposition des Magnetfelsensors eine Richtung der Komponente der Magnetisierung innerhalb des Maßstabes an dieser Längsposition zugeordnet, aus der die Längsposition des Magnetfeldsensors bestimmbar ist.

In einem einfachen Fall ist die gesamte Querschnittsfläche des Maßstabes bzw. der mehreren Maßstäbe gleichmäßig magnetisiert. Sie zeigt zum Beispiel am Anfang des Meßweges senkrecht nach oben. Mit Fortschreiten in Meßrichtung ist die Magnetisierungsrichtung gegenüber der Vorzugsrichtung (senkrechten Richtung) zunehmend geneigt. Damit ist jeder Position ein Wert des Winkels zwischen der Feldrichtung und der Vorzugsrichtung zugeordnet. Die magnetische Feldstärke in der Nähe des Maßstabes wird von der Größe des Querschnittes und vom Material des Maßstabes bestimmt. Sie ist also nicht von der Position in Meßrichtung abhängig. So können Maßstäbe mit beliebiger Länge und beliebiger Winkeländerung pro Länge in Meßrichtung benutzt werden und liefern für die zur Bestimmung der jeweiligen Feldrichtung eingesetzten Magnetfeldsensoren immer gleiche Meßbedingungen.

Als Sensor für die Bestimmung der Richtung des magnetischen Feldes wird vorteilhafterweise ein anisotrop magnetoresistiver Winkelsensor eingesetzt. Auf der Chipfläche des Sensors befindet sich eine Wheatstonebrücke, deren Ausgangssignal zum Sinus des doppelten Winkels zwischen der Feldrichtung und einer Kante des Chips und eine Brücke, deren Ausgangssignal zum Kosinus des doppelten Winkels proportional ist. Der magnetoresistive Winkelsensor wird in der Nähe des Maßstabes so angebracht, daß seine Chipfläche senkrecht auf der Meßrichtung steht. Da Sinus und Kosinus des doppelten Winkels gebildet werden, wird eine volle Periode des Ausgangssignales bereits für eine Verdrehung der Magnetisierungsrichtung gegenüber dem Ausgangswinkel von 180 ° erhalten. Damit ist bei Einsatz eines Maßstabes und eines Winkelsensors eine absolute Positionsangabe auch nur für diesen Winkelbereich möglich. Die Länge, über der der Maßstab mit der Winkelverdrehung von 180 ° magnetisiert wird, kann beliebig gewählt werden.

Da die Winkelmessung zur Bestimmung der Position selbstverständlich mit Fehlern behaftet ist, können sich für den Fall, das der Maßstab so magnetisiert ist, daß der Winkel der Magnetisierungsrichtung linear mit zunehmendem Positionswert zunimmt, bei langen Maßstäben auch größere Absolutlängenfehler ergeben. Vorteilhafterweise gibt es eine Vielzahl von Anordnungen, die das erfindungsgemäße Prinzip der Einstellung der Magnetisierungsrichtung in der senkrecht auf der Meßrichtung stehenden Querschnittsfläche benutzen, so daß die Meßlänge und die Meßgenauigkeit entsprechend den jeweiligen Anforderungen angepaßt werden können.

Wird die hohe Meßgenauigkeit nur über einem Teil des gesamten Meßweges benötigt, wird die Winkelzunahme pro Längeneinheit in diesem Teil höher gewählt als im übrigen Meßweg. Der Teil des Meßweges, der mit höherer Genauigkeit bestimmt werden kann, muß dabei nicht zusammenhängend sein, sondern kann auf mehrere Bereiche aufgeteilt sein. Im speziellen Fall kann die Winkelzunahme mit der Position auch stufenförmig erfolgen, wobei dann die Bereiche hoher Meßgenauigkeit die Ubergänge zwischen zwei Stufen sind. Wird die höhere Meßgenauigkeit für die Position über die gesamte Maßstabslänge gefordert, ist eine andere Ausführungsform der Erfindung anwendbar. Es werden zwei parallele Maß- stäbe eingesetzt. Beim ersten nimmt der Winkel der Magnetisierungsrichtung vom Ausgangswert linear mit zunehmender Position zu und die Verdrehung erreicht am Ende des Maßstabs 180 °. Der Winkel der Magnetisierungsrichtung des zweiten Maßstabes wächst ebenfalls linear mit der Position, aber mit wesentlich höherem Anstieg, so daß der zugehörige Winkelsensor, der bei einer Winkelverdrehung von 180 ° den Durchlauf einer vollen Periode anzeigt, über der Gesamtlänge eine Vielzahl von Perioden durchläuft. Die Winkelsensoren des ersten und des zweiten Maßstabes befinden sich in einer gemeinsamen, zur Meßrichtung senkrechten Ebene. Aus der Anzeige des Winkelsensors des ersten Maßstabes ist ermittelbar, in der wievielten Periode des zweiten Maßstabes sich der zugehörige Sensor befindet. Die Anzeige des zweiten Sensors liefert die Position innerhalb dieser Periode mit einer Genauigkeit, die etwa um die Gesamtzahl der Perioden des zweiten Maßstabes besser ist als die des Winkelsensors des ersten Maßstabes.

In einer weiteren Ausführungsform der Erfindung werden ebenfalls zwei parallel angeordnete Maßstäbe verwendet. Die Winkelverdrehung der beiden Maßstäbe wächst linear mit der Position und durchläuft bei beiden viele Perioden. Die Zahl der Perioden auf der Gesamtlänge unterscheidet sich jedoch um eins. Die Winkelsensoren des ersten und des zweiten Maßstabes befinden sich in einer gemeinsamen, zur Meßrichtung senkrechten Ebene. Aus der Differenz der Winkelanzeige der beiden Sensoren wird ermittelt, in der wievielten Periode des ersten Maßstabes sich die Sensoren befinden. Die genaue Position ergibt sich dann aus der zusätzlichen Berücksichtigung der Anzeige des zum ersten Maßstab gehörenden Sensors.

In einer weiteren Ausführungsform der Erfindung ist ein sehr langer Maßstab in Meßrichtung in eine Vielzahl von Bereichen gleicher Länge unterteilt. Jeder Bereich enthält die gleiche Anzahl von gleich langen Abschnitten. Diese Anzahl kann beispielsweise fünf sein. In jedem ersten Abschnitt jedes Bereiches steigt der Winkel der Magnetisierungsrichtung vom Anfang her linear mit wachsendem Positionswert bis auf einen bestimmten Grenzwinkel an. In den anderen vier Abschnitt hat der Winkel der Magnetisierungsrichtung innerhalb der Abschnittslänge jeweils einen konstanten Wert, der aber in jedem Fall größer ist als der genannte Grenzwinkel. Die vier diskreten Winkelwerte in diesen vier Abschnitten sind Zahlen werten zugeordnet. Werden beispielsweise vier diskrete Winkelwerte unterschieden und den Zahlen 0, 1, 2 und 3 zugeordnet, können in den vier Abschnitten alle Zahlen von 0 bis 255 dargestellt werden. Ebenso viele Bereiche können also in der Reihenfolge dieser Zahlen gekennzeichnet werden. Stehen jedem Abschnitt eines Bereiches zwei Winkelsensoren im Abstand der halben Abschnittslänge gegenüber, so können der spezielle Winkelwert im ersten Abschnitt und die den Zahlenwerten zugeordneten Winkelwerte der weiteren vier Ab schnitte in jeder Position der Sensoranordnung bezüglich des Maßstabes ermittelt werden. Aus der ermittelten Zahl läßt sich angeben, der wievielte Bereich des Maßstabes von der Sensoranordnung erreicht ist. Aus dem speziellen Winkelwert des jeweiligen ersten Abschnittes ist wegen des linearen Anstieges des Winkels mit zunehmender Position die Position mit hoher Genauigkeit ablesbar. Werden die Längen der Abschnitte mit 20 mm gewählt und im ersten Abschnitt steigt der Winkel mit der Position von 0° auf 40° und kann mit einem Meßfehler von weniger als ein Grad gemessen werden, dann ist eine Gesamtmeßlänge von 25,6 m mit einer von der Winkelmessung her begrenzten Genauigkeit von 0,5 mm meßbar. Die dabei erreichte Auflösung liegt bei mehr als 15 bit.

Die bisher genannten Zahlenwerte sollen die mit erfindungsgemäßen Längenmeßsystemen möglichen Vorteile demonstrieren. Sie stellen keineswegs die Grenze des Erreichbaren dar. So ist es bei der vorhandenen Meßgenauigkeit für die Winkel durchaus möglich, statt der Zuordnung von vier Zahlenwerten zu vier diskreten Winkelwerten auch zehn diskreten Winkelwerten zehn Zahlen zuzuordnen und so die Angabe der Zahl der Bereiche, die zwischen dem Maßstabsanfang und der aktuellen Position der Sensoranordnung liegen, sofort im Dezimalsystem zu erhalten.

Weitere Ausführungsformen der Erfindung vermeiden Fehler in der Positionsmessung durch fehlerhafte Justierung der Lage der Winkelsensoren gegenüber dem Maßstab. So ist es vorteilhaft, nicht nur einen Winkelsensor neben dem Maßstab zu verwenden, sondern zwei Winkelsensoren an gegenüberliegenden Seiten des Maßstabes anzubringen. Befinden sich die Sensoren auf einer durch den Mittelpunkt des Maßstabsquerschnittes verlaufenden Linie und die Querschnittsfläche ist homogen magnetisiert, dann zeigen beide Sensoren den gleichen, fehlerfreien Winkel an. Verläuft die Verbindungslinie jedoch nicht durch den Mittelpunkt, dann mißt der erste Sensor einen um einen bestimmten Betrag zu großen Winkelwert und der zweite Sensor einen um denselben Betrag zu kleinen Winkelwert. Der Mittelwert beider Meßwerte liefert also den exakten Wert, ohne daß eine genaue und aufwendige Justage der Lage der Sensoren gegenüber dem Maßstab nötig wäre.

In einer weiteren Ausführung der Erfindung werden zwei in Meßrichtung in bestimmtem Abstand nebeneinander angeordnete magnetoresistive Winkelsensoren verwendet. Dieser bestimmte Abstand stimmt mit der Länge überein, über die am Anfang des Maßstabes sich eine Drehung der Richtung der Magnetisierung um 180° erstreckt und über der das Ausgangssignal der Sensoren eine volle Periode durchläuft. Damit stimmen die Ausgangssignale beider Sensoren am Maßstabsanfang überein.

Das Anwachsen des Winkels mit der Position in Meßrichtung verläuft bei dem verwendeten Maßstab nicht linear, sondern quadratisch. Mit wachsender Position hat so der in dieser Richtung versetzte Sensor einen zunehmend größeren Winkelbereich durchlaufen als der andere Sensor. Wegen der quadratischen Zunahme des Winkels wächst dieser Winkelbereich mit der Position linear an, und die Differenz der Ausgangssignale der beiden Sensoren ist dem Positionswert proportional. Die Positionsangabe ist absolut, wenn der in Richtung wachsender Position versetzte Sensor am Maßstabsende nicht mehr als eine volle Sensorperiode mehr durchlaufen hat als der andere Sensor. Als Vorteil dieser Anordnung erweist. sich, daß der Maßstab hier ohne Einfluß auf die Meßsignale beliebig um seine Längsachse verdreht sein kann.

In den bisher erwähnten Ausführungen der Erfindung war der Maßstab stets im gesamten Querschnitt des Maßstabes homogen magnetisiert. Der Querschnitt des Maßstabes kann auch mehrpolig magnetisiert sein, so daß sich am Umfang nebeneinander Nord- und Südpole abwechseln. Entsprechend der Erfindung ist das im Querschnitt am Anfang des Maßstabes vorhandene Magnetmuster dann mit Fortschreiten in Meßrichtung mit zunehmendem Winkel verdreht. Ein solcher mehrpolig magnetisierter Maßstab hat den Vorteil, daß die Verdrehung des Magnetisierungsmusters mit fortschreitender Position sich in einer um die halbe Polzahl vervielfältigten Drehung des Magnetfeldes in Maßstabsnähe auswirkt, so daß eine erheblich gesteigerte Zunahme des durch die Winkelsensoren gemessenen Winkels pro Längeneinheit des Maßstabes erreicht wird. Damit ist eine wesentlich gesteigerte Auflösung der gemessenen Länge gegeben.

Ein erfindungsgemäßes Längenmeßsystem liegt auch dann vor, wenn nur ein Teil des Quer schnitts des Maßstabes aus hartmagnetischem Material besteht. Kennzeichnend für die Erfindung ist die Verdrehung der Richtung der Magnetisierung mit Fortschreiten in Meßrichtung. Bei einem kreisförmigen Querschnitt kann beispielsweise der konzentrische innere kreisförmige Teil aus hartmagnetischem Material bestehen und der diesen umgebende kreisringförmige Teil aus unmagnetischem, mechanisch stabilen Material. Das mechanisch stabile Material verhindert eine mechanische Torsion des Maßstabes um seine Längsachse und trägt so zur Verringerung von Meßfehlern bei. Die Verteilung der Materialien in der Querschnittsfläche kann auch umgekehrt so erfolgen, daß es einen nichtmagnetischen Kern gibt und eine dauermagnetische Schale. Das hätte den Vorteil, daß die Winkelsensoren näher am dauermagnetischen Teil anzubringen sind und höhere Feldstärken auf die Winkelsensoren einwirken.

Wird der nicht hartmagnetische Kern des Querschnitts aus weichmagnetischem, mechanisch stabilen Material gefertigt, trägt er gleichzeitig zur Vermeidung von Fehlern durch mechanische Beanspruchung als auch zur Erhöhung der magnetischen Feldstärke in Maßstabsnähe bei.

Die Erfindung erstreckt sich auch auf Maßstäbe, bei denen beispielsweise der innere, nicht dauermagnetische Teil des Querschnitts des Maßstabes nicht kreisförmig ist, sondern eine Form hat, die ihn besonders widerstandsfähig gegen mechanische Deformationen macht. Dabei ist es auch nicht notwendig, daß der dauermagnetische Teil des Querschnittes den mechanisch stabilen Teil vollständig oder annähernd umschließt.

Ein besonderer Vorteil bei der Verwendung des erfindungsgemäßen Längenmeßsystem besteht darin, daß nach dem Ausfall der elektrischen Energieversorgung keine Normierung des Meßsystems vorgenommen werden muß, da jedem Magnetisierungswinkel eine Position zugeordnet ist. Selbstverständlich kann das Längenmeßsystem auch für Zwecke eingesetzt werden, die nicht unmittelbar die Erfassung einer Länge oder einer Position zum Ziel haben, sondern daraus auf eine andere Größe schließen, z.B. auf das Gewicht eines Sitzbenutzers. Diese Information kann zur Steuerung des Airbags genutzt werden. Somit eignet sich das Meßsystem besonders zur Verwendung in Verbindung mit der Verstellmechanik einer Verstelleinrichtung für ein Kraftfahrzeug.

Natürlich können mit dem erfindungsgemäßen Längenmeßsystem in Analogie zu den bekannten Impulse zählenden Meßprinzipien (z.B. bei Kombination eines rotierenden Ringmagneten mit einem Hallelement) auch dynamische Parameter wie Geschwindigkeit und Beschleunigung ermittelt werden. Dazu müssen lediglich die zwischen den verschiedenen Magnetisierungswinkeln abbildbaren Wegstrecken mit der entsprechenden Verstellzeit in Beziehung gesetzt werden.

Darüber hinaus eignet sich das neue Längenmeßsystem auch zur Durchführung einer sogenannten Eigendiagnose, da auch nach einer Störung eine eindeutige Positionsbestimmung eines Verstellteils möglich ist. Im Ergebnis einer solchen Eigendiagnose könnte beispielsweise ein Verstellsystem (z.B. ein elektrisch betriebener Fensterheber oder ein Fahrzeugschloß) vom Normalbetrieb in einen Notlaufbetrieb überführt werden, um Risiken für den Benutzer zu minimieren. So kann beispielsweise der Automatiklauf einer Fensterscheibe in Richtung Heben unterbunden werden, um die Einklemmgefahr zu reduzieren, oder für eine Fahrzeugschloß wird die Funktion "Save" ausgeschlossen, um zu verhindern, daß ein Passagier eingeschlossen werden kann.

Die Erfindung wird nachstehend an Ausführungsbeispielen näher erläutert. Die zugehörigen Zeichnungen zeigen in:
- Fig. 1 -: einen kreisrunden Maßstab mit Magnetisierungsrichtung in der Querschnittsfläche,
- Fig. 2 -: einen kreisrunden Maßstab mit Bereichen konstanter Magnetisierungsrichtung,
- Fig. 3 -: einen Maßstab mit einem in der Nähe angeordneten Winkelsensor in fünf zeitlich nacheinander möglichen Positionen,
- Fig. 4 -: einen homogen magnetisierten Querschnitt eines Maßstabes,
- Fig. 5 -: einen mehrpolig magnetisierten Querschnitt eines Maßstabes,
- Fig. 6 -: einen Querschnitt eines Maßstabes mit konzentrischen Teilen dauermagnetischen und nicht dauermagnetischen Materials,
- Fig. 7 -: einen Querschnitt eines Maßstabes, bei dem das dauermagnetische Material das nicht magnetische Material nicht umschließt,
- Fig. 8 -: einen Querschnitt eines Maßstabes mit mechanisch widerstandsfähigem Profil des nicht dauermagnetischen Teiles,
- Fig. 9 -: einen Maßstab mit einem Winkelsensor,
- Fig. 10 -: einen Maßstab mit zwei Winkelsensoren in der Ebene des Querschnitts des Maßstabes,
- Fig. 11 -: die Seitenansicht eines Längenmeßsystems mit gleichmäßiger Periodenlänge der Drehung der Magnetisierung,
- Fig. 12 -: die Seitenansicht eines Längenmeßsystems mit zwei in Meßrichtung gegeneinander versetzten Winkelsensoren und einem Diagramm der quadratischen Winkelzunahme mit der Position.
- Fig. 13 -: schematische Darstellung der Seitenansicht eines längs- und höhenverstellbaren Fahrzeugsitzes mit mehreren erfindungsgemäßen Meßsystemen;
- Fig. 14 -: perspektivische Darstellung der metallischen Struktur eines Kraftfahrzeugsitzes mit mehreren schematisch angedeuteten erfindungsgemäßen Meßsystemen;
- Fig. 15a -: Kreuzarmfensterheber mit einem sich entlang des Verzahnungsbereiches erstreckenden magnetischen Maßstab;
- Fig. 15b -: Kreuzarmfensterheber mit einem sich in der Nähe der Schwenkachse des Zahnsegmenthebels bogenförmig erstreckenden magnetischen Maßstab;
- Fig. 15c -: Kreuzarmfensterheber mit einem entlang der Führungsschiene des Ausgleichshebels verschiebbaren magnetischen Maßstab;
- Fig. 16 -: Einarmfensterheber mit einem mit dem Antrieb gekoppelten und verschiebbaren magnetischen Maßstab;
- Fig. 17a -: Seitenansicht der Führungsschiene eines Seilfensterhebers mit einem sich in Verschieberichtung erstreckenden magnetischen Maßstab;
- Fig. 17b -: Schnittdarstellung durch die Führungsschiene im Bereich des mit der Fensterscheibe verbundenen Mitnehmers;
- Fig. 18a -: schematische Schnittdarstellung durch einen Antrieb mit einem ringförmigen magnetisierten Element;
- Fig. 18b -: schematische Schnittdarstellung eines Antriebs mit einem magnetisierten Element in Form eines umlaufenden Riemens;
- Fig. 19 -: schematische Schnittdarstellung durch einen Antrieb mit einer Seiltrommel und einem quer zur Rotationsachse verschiebbaren magnetischen Maßstab;
- Fig. 20 -: Kraftfahrzeugtür mit einem an der vertikalen Scheibenkante angeordneten magnetischen Maßstab.

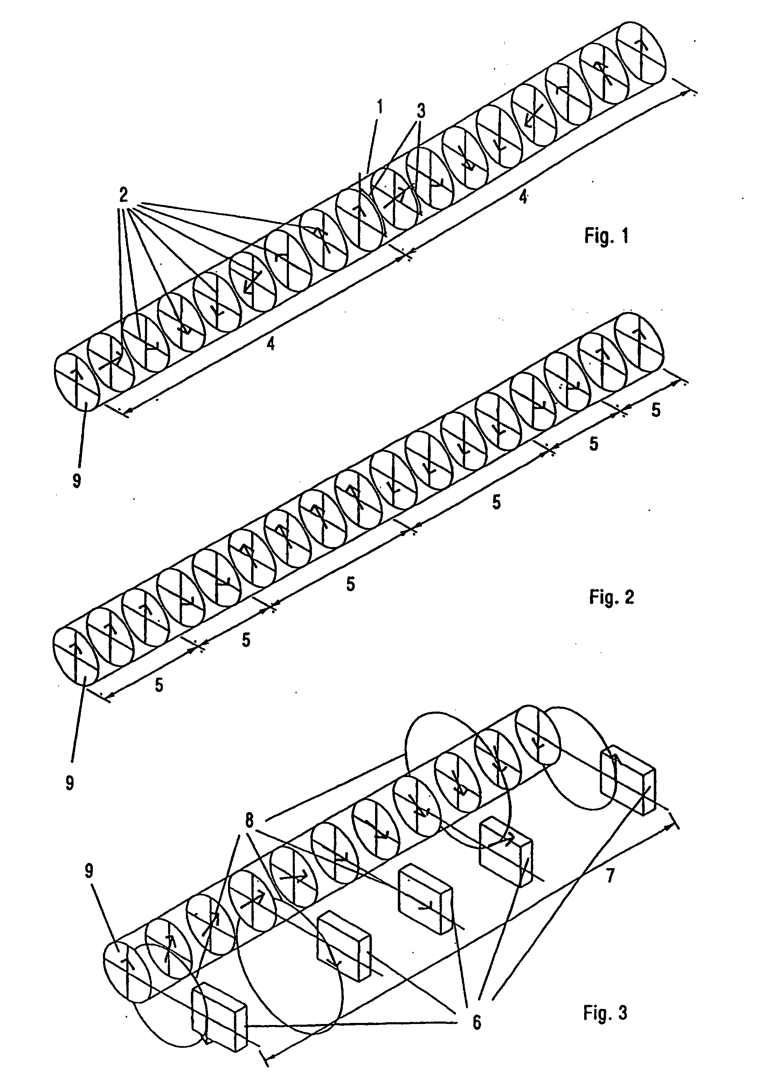

In Fig. 1 sind die physikalischen Grundlage der Erfindung dargestellt. Ein dauermagnetischer Maßstab 1 hat einen runden Querschnitt 9. Er ist so magnetisiert, daß die Richtung der Magnetisierung 2 in der Fläche des Querschnitts 9 liegt. Der Querschnitt 9 dehnt sich senkrecht zur Längsrichtung des Maßstabes 1 aus, die mit der Meßrichtung übereinstimmt. Die Magnetisierung 2 ist am Anfang des Maßstabes 1 senkrecht nach oben gerichtet. Mit Fortschreiten in Meßrichtung ist die Richtung der Magnetisierung 2 mit kontinuierlich geändertem Winkel 3 in Uhrzeigerrichtung verdreht. Nach einer bestimmten Länge 4, die bei konstanter Winkeländerung mit der Längeneinheit in Meßrichtung einer vollen Periode der Drehung der Richtung der Magnetisierung 2 entspricht, ist die Anfangsrichtung der Magnetisierung 2 wieder erreicht. Die Gesamtlänge des Maßstabes 1 enthält in der Fig. 1 zwei Periodenlängen 4, weshalb eine absolute Positionsinformation im Gegensatz zu einem Maßstab mit weniger als einer Periodenlänge (vergl. Fig. 3) nicht vorliegt. Das Magnetfeld in der Nähe des Maßstabes 1 wird durch die Magnetisierung 2 des Maßstabes 1 bestimmt. Ist die Periodenlänge 4 groß gegen den Durchmesser des Querschnitts 9, liegt die Magnetfeldrichtung im wesentlichen in der Ebene des jeweiligen Querschnittes 9. Ihre Richtung in dieser Ebene wird durch die Richtung der jeweiligen Magnetisierung 2 bestimmt. Die Magnetfeldstärke ist bei einem bestimmten Radius rund um den Maßstab 1 näherungsweise unabhängig vom Winkel 3.

Fig. 3 zeigt, welchen Verlauf die magnetischen Feldlinien 8 in der Nähe des Maßstabes 1 haben und welche Richtung das Magnetfeld in der Chipfläche eines Winkelsensors 6 hat, der gegenüber dem Maßstab 1 in einem bestimmten Abstand bewegbar ist. Der Winkelsensor 6 ist in fünf Positionen gezeichnet, die er zeitlich nacheinander einnehmen kann. Wie aus den Magnetfeldrichtungen hervorgeht, die am jeweiligen Ort des Sensors 6 aus der Richtung der Feldlinien ermittelt wurden, dreht sich das Magnetfeld neben dem Maßstab 1 im entgegengesetzten Drehsinn zur Magnetisierung 2. Die jeweilige Position kann eindeutig aus dem Winkel ermittelt werden, solange jeder Winkelwert der Feldrichtung und damit auch der Winkel 3 der Magnetisierungsrichtung über der gesamten Länge des Maßstabes 1 nur einmal vorkommt. Damit kann im allgemeinen eine Drehung der Magnetisierungsrichtung um bis zu 360° verwendet werden, soweit die Winkelsensoren den wirklichen Winkel der Richtung anzeigen.

Im speziellen Fall werden Winkelsensoren eingesetzt, die den anisotropen magnetoresistiven Effekt nutzen. Solche Winkelsensoren sind bekannt. Sie liefern ein Ausgangssignal, das zum Sinus des doppelten Winkels zwischen Feldrichtung und einer Kante des Sensorchips und ein Ausgangssignal, das zum Kosinus des doppelten Winkels zwischen der Feldrichtung und der Kante proportional ist. Damit ist eine eindeutige Zuordnung des Winkels der Magnetfeldrichtung und damit der Magnetisierungsrichtung 2 nur noch für einen Bereich von 180° möglich. Diese Einschränkung wird in ihrer Auswirkung dadurch aufgehoben, daß beim Einsatz anisotroper magnetoresistiver Sensoren die Zunahme des Winkels 3 der Magnetisierung 2 pro Längeneinheit in Meßrichtung auf die Hälfte reduziert wird. Die Meßauf lösung ist wegen der Proportionalität zum Sinus und Kosinus des doppelten Winkels auch doppelt so groß, so daß schließlich die gleiche Auflösung erreicht wird. Vorteilhaft wirkt sich in jedem Fall die hohe Magnetfeldempfindlichkeit der anisotropen magnetoresistiven Sensoren aus, die dazu führt, daß auch noch bei größeren Abständen zwischen Sensor 6 und Maßstab 1 eine Winkelmessung mit geringem Fehler möglich ist.

Fig. 2 zeigt einen Maßstab 1, bei dem - abweichend vom Gegenstand der vorliegenden Brfindung - in größeren Bereichen 5, die sich in Meßrichtung erstrecken, jeweils die Richtung der Magnetisierung 2 konstant eingestellt ist. Jeder Magnetisierungsrichtung ist ein bestimmter Zahlenwert zugeordnet. In der Darstellung in Fig. 2 gibt es vier unterschiedliche Richtungen. Es können hier in jedem Bereich vier unterschiedliche Zahlen werte auftreten, die als 0, 1, 2 und 3 bezeichnet werden. Über eine Länge der sechs dargestellten Bereiche können durch diese vier Zahlenwerte in sechs Stellen 4056 unterschiedliche Zahlen dargestellt werden. Haben alle Bereiche 5 die gleiche Länge von je 1 cm und unterscheidet sich die folgende Zahl von der vorigen immer um 1, so kann damit eine Länge von 6 cm x 4056 = 243 m kodiert und bei erkennen der jeweiligen Zahl durch zwölf Winkelsensoren im Abstand von der halben Länge eines Bereiches mit einer Auflösung und Genauigkeit von 1 cm gemessen werden.

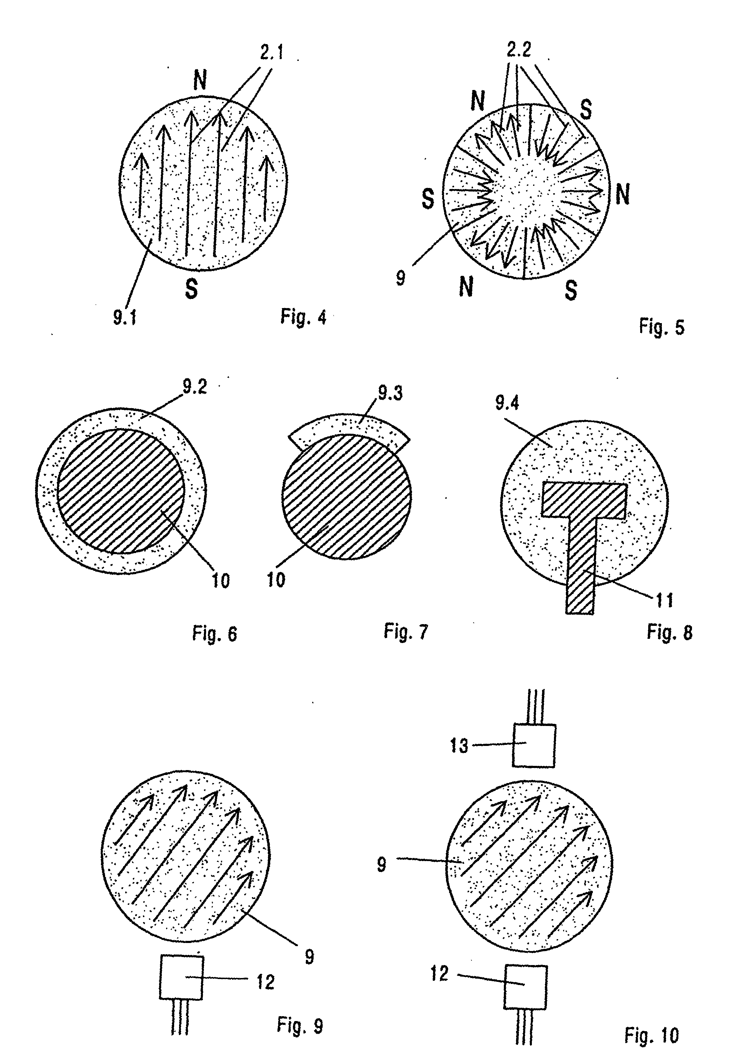

Der Querschnitt eines erfindungsgemäß gestalteten Maßstabes 1 kann geometrisch und magnetisch unterschiedlich ausgestaltet werden. Fig. 4 zeigt den in den bisher beschriebenen Ausführungsbeispielen benutzten kreisrunden Querschnitt 9.1, in dem die Magnetisierungslinien parallel zueinander verlaufen. Damit gibt es am halben Kreisumfang einen Nordpol N und an dem anderen halben Kreisumfang einen Südpol 5. Der gezeigte Querschnitt stellt den Verlauf der Magnetisierung bei einer bestimmten Position entlang des Maßstabes 1 dar. Bei anderen Positionen weist die Magnetisierungsrichtung gegenüber der dargestellten eine Verdrehung um einen Winkel auf. Wird das dargestellte einfache Magnetmuster entlang der Meßrichtung um 360° verdreht, dreht sich die Richtung des Magnetfeldes auf einer Parallelen zur Achse des Maßstabes 1 in der Nähe des Maßstabes 1 in umgekehrtem Drehsinn ebenfalls um 360°.

Fig. 5 zeigt ein sechspoliges Magnetisierungsmuster im Querschnitt 9 in einer bestimmten Position. Die Magnetisierungslinien 2.2 verlaufen radial und sind im Bereich der Nordpole N zum Kreisumfang und im Bereich der Südpole 5 zur Kreismitte gerichtet. In Meßrichtung ist eine zunehmende Verdrehung des Magnetmusters zu dem dargestellten vorhanden. Wird das dargestellte Magnetmuster entlang der Meßrichtung um 120° gedreht, dreht sich die Richtung des Magnetfeldes auf einer Parallelen zur Achse des Maßstabes 1 in der Nähe des Maßstabes 1 im umgekehrten Drehsinn bereits um 360°. Bei gleicher Zunahme des Winkels der Verdrehung des Magnetmusters mit der Längeneinheit in Meßrichtung wie im Falle des Magnetmusters nach Fig. 4 ist bei Einsatz des gleichen Winkelsensors hier die dreifache Längenauflösung vorhanden. Die eindeutige Zuordnung der Position des Sensors 6 entlang dem Maßstab 1 ist nur für eine Verdrehung des Magnetmusters von 120° möglich. Für eine Verdrehung des Magnetmusters um 360° ergeben sich drei Perioden für das Ausgangssignal des Sensors. Die Positionsmessung über diesen vollen Bereich ist also nur inkremental möglich.

In dem in Fig. 6 dargestellten Querschnitt besteht nur der äußere Ring 9.2 aus hartmagnetischem Material, daß ein Magnetmuster trägt, welches in fortschreitender Meßrichtung zunehmend verdreht ist. Im inneren Teil 10 des Querschnitts befindet sich mechanisch stabiles, weichmagnetisches Material. Durch die hohe magnetische Permeabilität des weichmagnetischen Materials wird die Feldstärke in der Nähe des Maßstabes 1 zumindest bei mehrpoligen Magnetmustern bis auf maximal das doppelte erhöht, was zur Erhöhung der Genauigkeit der Winkelmessung beiträgt. Die hohe Torsionssteifigkeit des mechanisch stabilen Materials verhindert weitgehend eine Torsion des Maßstabes 1 bei Einwirkung mechanischer Kräfte und damit durch diese Kräfte hervorgerufene Winkelfehler des Maßstabes 1. Bei guter Torsionssteifigkeit des inneren Teils 10 des Querschnittes kann so auch relativ weiches, plastgebundenes hartmagnetisches Material für den äußeren Ring 9.2 benutzt werden.

Fig. 7 zeigt einen weiteren möglichen Querschnitt für einen Maßstab 1. Auf einem runden Stab 10 aus nicht magnetischem, torsionssteifen Material ist ein Ringausschnitt 9.3 aus hartmagnetischem Material aufgebracht. Der Ringausschnitt ist mehrpolig in radialer Richtung magnetisiert. Mit fortschreitender Meßrichtung ist das Magnetmuster mit zunehmendem Winkel verdreht. Über dem Ringausschnitt befindet sich ein Winkelsensor, der die Richtung des Magnetfeldes feststellt und der auf einer zur Achse des runden Stabes 10 parallelen Linie bewegbar ist. Aus dem Winkelwert wird die Position in Meßrichtung ermittelt, die entlang der Linie verläuft.

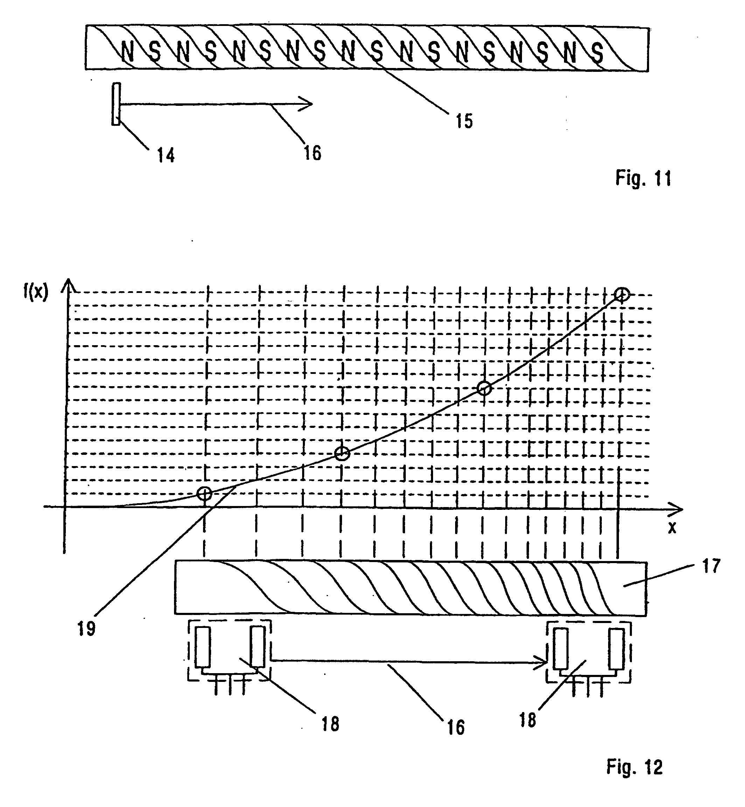

Fig. 8 zeigt einen weiteren Querschnitt des Maßstabes 1. Im etwa kreisförmigen hartmagnetischen Material 9.4 befindet sich ein T-förmig ausgebildetes Teil 11 aus einem nicht magnetischen Material mit hohem Elastizitätskoeffizienten. Das in der Fig. 8 nicht gezeichnete Magnetisierungsmuster des hartmagnetischen Materials 9.4 ist wieder mit fortschreitender Meßrichtung zunehmend verdreht. Das T-förmig ausgebildete Teil 11 verhindert bei in der Querschnittsebene entlang des Maßstabes 1 angreifenden Kräften ein Durchbiegen des Maßstabes 1 und trägt so zur Vermeidung dadurch bedingter Meßfehler für den Winkelwert bei.

Die Anordnung eines magnetoresistiven Winkelsensors 12 in der Ebene des Querschnittes 9 des Maßstabes 1 zeigt Fig. 9. Die Chipebene des magnetoresistiven Winkelsensors 9 liegt in der gleichen Ebene wie der Querschnitt 9. Der Winkelsensor ist auf einer Linie, zu der die Achse des Maßstabes 1 parallel verläuft, gegenüber dem Maßstab 1 bewegbar.

Fig. 10 zeigt die Anordnung von zwei anisotrop magnetoresistiven Winkelsensoren 12 und 13 für die Magnetfeldrichtung. Die beiden Winkelsensoren 12 und 13 liegen einander gegenüber in der Nähe des Querschnitts 9 des Maßstabes 1. Der Maßstab 1 ist im Querschnitt 9 homogen magnetisiert. Geht die Verbindungslinie der Mittelpunkte der beiden Winkelsensoren genau durch den Mittelpunkt des Querschnittes 9, dann zeigen beide Winkelsensoren den gleichen Winkelwert an. Ist die Verbindungslinie jedoch gegen den Mittelpunkt seitlich nach rechts verschoben, dann zeigt der Winkelsensor 13 einen um einen bestimmten Betrag vergrößerten Winkelwert an. Der Winkelsensor 12 zeigt einen um denselben bestimmten Betrag verringerten Winkelwert an. Der Mittelwert beider Meßwerte ergibt für alle Verschiebungen stets den richtigen Winkelwert der Magnetfeldrichtung. Die Anordnung mit zwei Winkelsensoren erspart so die genaue Justierung der Lage der Sensoren gegenüber der Lage des Maßstabes 1 und verhindert Fehler, die durch seitliche Verschiebungen der Sensorhalterung gegenüber dem Maßstab 1 verursacht werden könnten.

In Fig. 11 ist ein Längenmeßsystem dargestellt, das aus einem inkrementalen Maßstab 15, der in seiner Querschnittsfläche homogen magnetisiert ist und bei dem die Richtung der Magnetisierung mit zunehmender Position in Meßrichtung 16 mit linear dazu ansteigendem Winkel verdreht ist, und aus einem in Meßrichtung 16 verschiebbaren anisotrop magnetoresistiven Winkelsensor 14 besteht. Die Magnetisierung ist über die Gesamtlänge des inkrementalen Maßstabes 15 im dargestellten Fall um acht maI 360° verdreht. Da der anisotrop magnetoresistive Winkelsensor 14 den doppelten Winkel der Feldrichtung anzeigt, wird das Ausgangssignal des Sensors 14 über der Gesamtlänge des Maßstabes 15 16mal periodisch wiederholt. Eine Positionsangabe ist mit dem dargestellten Längenmeßsystem also nur möglich, wenn neben dem angezeigten Winkel auch noch die Zahl der vom Anfang des inkrementalen Maßstabes 15 zurückgelegten Perioden ermittelt wird. Ein Absolutlängenmeßsystem wird aus dem in Fig. 11 dargestellten, wenn parallel zum inkrementalen Maßstab 15 ein zweiter Maßstab gleicher Länge angebracht wird, dessen Magnetisierung auf der Gesamtlänge nur um 180° verdreht ist. Ein weiterer anisotrop magnetoresistiver Winkelsensor ist mit dem ersten 14 in derselben Ebene senkrecht zur Meßrichtung 16 angebracht und mißt den Feldwinkel des zweiten Maßstabes, aus dem sich eindeutig schließen läßt, in welcher Periode des inkrementalen Maßstabes 15 sich die Sensoranordnung gerade befindet. Aus den Winkelwerten der beiden Sensoren läßt sich ohne Bewegung der Sensoranordnung relativ zu den Maßstäben die entsprechende Position absolut angeben. Durch die Vielzahl der Periodenlängen des inkrementalen Maßstabes 15 ist das mit hoher Auflösung und Genauigkeit möglich.

Fig. 12 zeigt ein Längenmeßsystem mit einem Maßstab 17 und einer Winkelsensoranordnung 18, die in zwei zeitlich nacheinander eingenommenen Positionen gezeichnet ist. Der Maßstab 17 ist in der Querschnittsfläche homogen magnetisiert. Die Zunahme des Verdrehungswinkels f(x) der Magnetisierungsrichtung mit der Position x in Meßrichtung 16 erfolgt quadratisch, wie in der Grafik über der Darstellung des Längenmeßsystems zu sehen. Der Abstand der beiden Winkelsensoren der Winkelsensoranordnung 18 stimmt mit der Periodenlänge am Anfang des Maßstabes 17 überein. Deshalb zeigen hier beide Sensoren den gleichen Winkelwert und die Differenz beider Winkelwerte ist null. Je weiter die Sensoranordnung in Meßrichtung 16 verschoben wird, um so mehr steigt die Differenz der beiden Winkelwerte an. Wegen der quadratischen Zunahme der Winkelverdrehung der Magnetisierung des Maßstabes 17, ist die Winkeldifferenz eine lineare Funktion der Position. Die Winkeldifferenz bleibt unter 3600 und damit eindeutig, wenn der Maßstab 17 dort aufhört, wo der Abstand der beiden Winkelsensoren mit der Länge übereinstimmt, über der sich die Magnetisierung um 7200 dreht. Werden längere Maßstäbe verwendet, ist keine Absolutlängenangabe mehr möglich, es können aber inkrementale Systeme realisiert werden. Der besondere Vorteil des Längenmeßsystems nach Fig. 12 liegt darin, daß der Maßstab 17 als ganzes um seine Achse beliebig verdreht werden kann, ohne das Meßergebnis zu beeinflussen, denn durch die zwei vorhandenen Winkelsensoren in der Winkelsensoranordnung 18 werden nur noch Winkeldifferenzen zwischen beiden Sensoren ermittelt und nicht der Winkel der Magnetisierung gegen eine raumfeste Gerade in der Querschnittsfläche des Maßstabes 17.

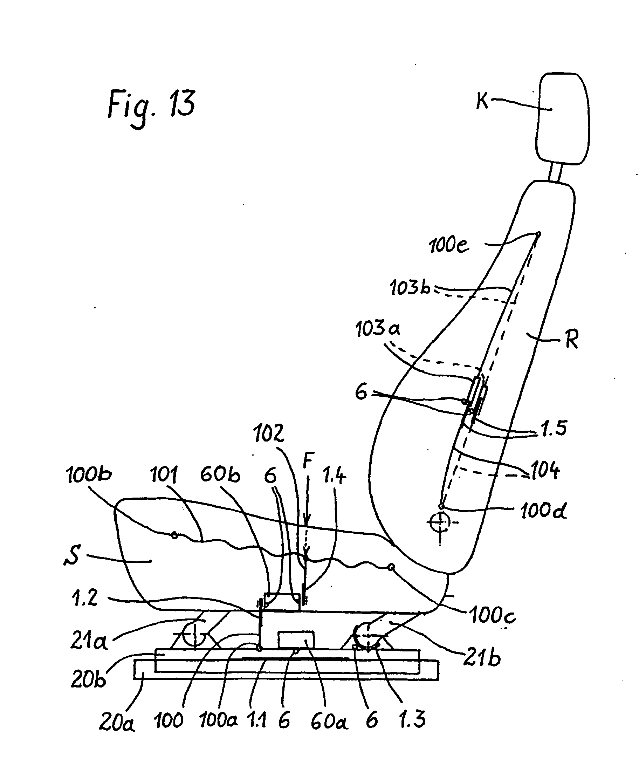

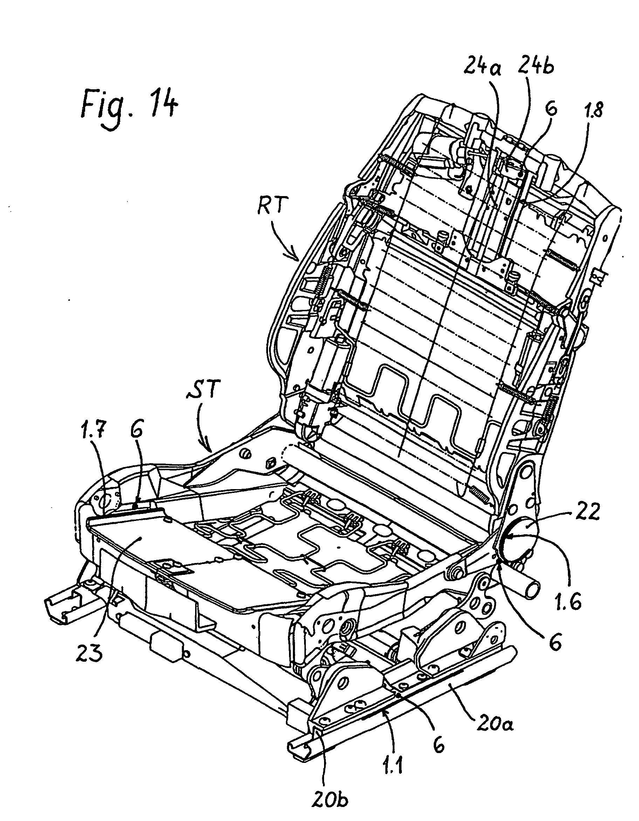

In den Figuren 13 und 14 sind einige Beispiele der Verwendung des Längenmeßsystems für einen Kraftfahrzeugsitz dargestellt wobei dieses insbesondere Bestandteil einer Einrichtung zur Sitzlängsverstellung, Sitzhöhenverstellung, Sitzlehnenneigungsverstellung, Kopfstützenhöhenverstellung oder Sitzkissentiefenverstellung sein kann.

So ist beispielsweise der Maßstab 1.1 mit einer am Fahrzeugboden festgelegten Führungsschiene 20a einer Sitzlängsverstellung oder mit einem sonstigen fahrzeugbodenfesten Teil verbunden, wobei sich der Maßstab 1.1 im wesentlichen in Verschieberichtung des Sitzes erstreckt. Der Sensor 6 ist mit einem an der Oberschiene festgelegten Teil, z.B. einer (nicht dargestellten) Abdeckblende verbunden oder er ist Bestandteil einer mitfahrenden Steuerungselektronik 60a.

In einem weiteren Ausführungsbeispiel zeigt Figur 13 zum Zwecke der Bestimmung der Sitzhöhe einen Maßstab 1.2, der über eine Verbindungsstange 100 im Gelenk 100a an der bezüglich des Fahrzeugbodens nicht höhenverstellbaren Oberschiene 20b lagert und sich im wesentlichen vertikal erstreckt. Der zugeordnete Sensor 6 ist in die am Sitzkissenträger (ST) festgelegte Steuerungselektronik 60b integriert. Bei einer Verstellung der Sitzhöhe über die Neigung des vorderen und hinteren Gelenkhebels 21a, 21b kommt es zu einer Verschiebung des Maßstabs 1.2 bezüglich des Sensors 6. Die gleichzeitige Relativbewegung in X-Richtung (Fährtrichtung) kann durch das Gelenk 100a oder durch eine elastisch ausgebildete Verbindungsstange ausgeglichen werden. Die Überlagerung der beiden Bewegungen infolge der gewählten konstruktiven Verstellkinematik wird selbstverständlich bei der Bewertung der Meßsignale berücksichtigt.

Grundsätzlich läßt sich die Sitzhöhe auch über den Neigungswinkel eines Schwenkhebels 21b ermitteln, indem man den Maßstab 1.3 bezüglich der Schwenkachse des Hebels 21b kreisbogenförmig ausbildet und anordnet und den zugeordneten Sensor 6 mit einem an der Oberschiene 20b festen Teil (z.B. einer Steuerungselektronik) verbindet.

In analoger Weise läßt sich die Neigung der Rückenlehne R bestimmen. Dazu wird der Maßstab 1.6 mit einem drehbar gelagerten Getriebeelement einer Einrichtung 22 zur Lehnenneigungsverstellung verbunden, während der zugeordnete Sensor 6 mit einem getriebegehäusefesten Teil verbunden ist. Der Maßstab 1.6 kann aber auch mit einen lehnenfesten Teil, dem sogenannten Lehnenbeschlag, und der zugeordnete Sensor (6) mit einem sitzuntergestellfesten Teil verbunden sein oder umgekehrt. Schließlich kommt es nur auf die Sensierung der Relativbewegung zwischen dem Rückenlehnenträger RT und dem Sitzkissenträger ST an.

Gemäß eines weiteren Ausführungsbeispiels ist der Maßstab 1.7 mit der Oberschenkelauflage 23 einer Sitzkissentiefenverstellung verbunden und der zugeordnete Sensor 6 ist am Sitzkissenträger befestigt.

Zur Steuerung einer Kopfstützenverstellung ist im Ausführungsbeispiel von Figur 14 ein mit dem Rückenlehnenträger RT fest verbundener Maßstab 1.8 vorgesehen, dem ein mit dem. Getriebe 24b verbundener Sensor 6 zugeordnet ist. Der Sensor 6 kann aber auch Bestandteil einer elektronischen Steuerungseinheit sein, die bezüglich des Rückenlehnenträgers RT ortsfest ist, wenn der zugeordnete Maßstab mit einem mit der verfahrbaren Kopfstütze verbundenen Teil in Verbindung steht.

Sofern das Längenmeßsystem Bestandteil einer Vorrichtung zur Sitzbelegungserkennung oder zur Sensierung des Belegungsgewichts sein soll, kann ein Maßstab 1.4, der über eine Verbindungsstange 102 an einer Sitzfeder 101 befestigt ist, im wesentlichen vertikal entlang einer elektronischen Steuerungseinheit 60b geführt sein. Die Steuerungseinheit 60b weist einen Sensor 6 auf, der die Meßsignale des dazu verschiebbaren Maßstabs 1.4 generiert. Eine Verschiebung des Maßstabs 1.4 tritt auf, wenn sich die in den Gelenken 100b, 100c gelagerte Sitzfeder 101 infolge der Gewichtskraft F eines Benutzers durchbiegt. Die dabei hervorgerufene translatorische Verschiebung des Maßstabes 1.4 entspricht in ihrem Maß der Gewichtskraft.

Um sicher die Belegung eines Sitzes durch eine Person von der Belegung durch sonstige vergleichbar schwere Gegenstände unterscheiden zu können, kann ein geeignet ausgebildetes Meßsystem auch in die Rückenlehne eingebaut werden. Gemäß Figur 14 ist der Maßstab 1.15 am freien Ende einer im Gelenk 100d angebundenen Verbindungsstange 104 angeordnet und in einer Führungshülse geführt, die über eine Verbindungsstange 100e am oberen Ende der Rückenlehne R im Gelenk 100e befestigt ist. Bei einer Belastung der Rückenlehne R werden die Teile 1.15, 103a, 103b, 104 nach hinten gedrückt, wobei sich ihre bogenförmige Kontur mehr und mehr abflacht und dabei der Maßstab 1.15 weiter in die Führungshülse 103a hinein geschoben wird. Der an der Führungshülse 103a befestigte Sensor 6 nimmt die damit verbundenen Meßsignale auf und leitet diese weiter an eine Auswerteeinheit.

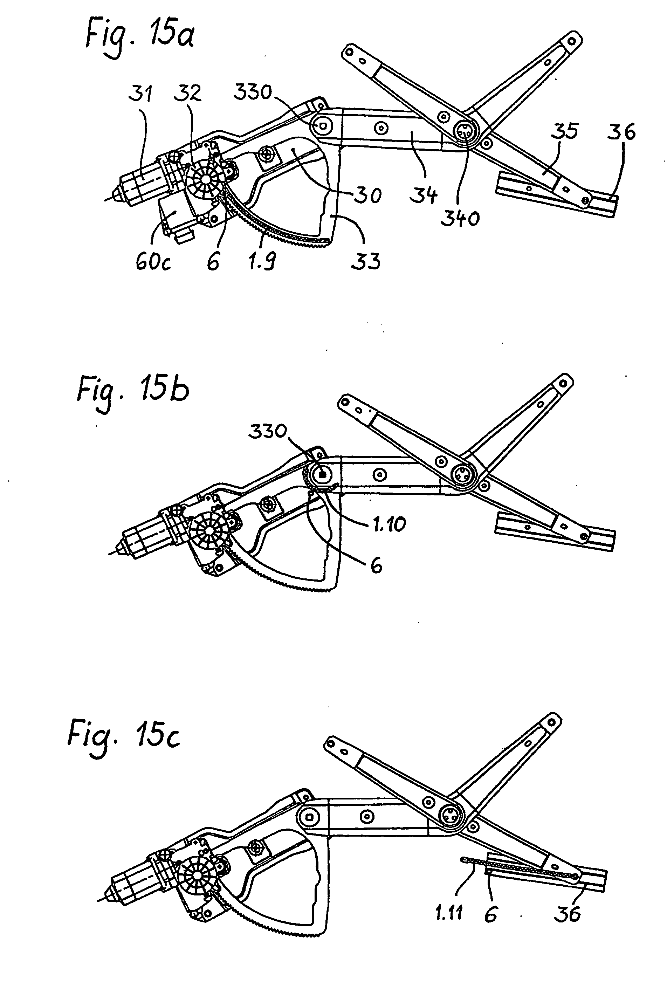

In den Figuren 15a bis 15c sind verschiedene Varianten der Integration des Längenmeßsystem in eine Verstellvorrichtung eines Fensterhebers dargestellt. Nach einer ersten Variante erstreckt sich der Maßstab 1.9 parallel zur Verzahnung des Zahnsegmenthebels 33, der auf der Grundplatte 30 in der Achse 330 drehbar lagert und mit dem Antriebshebel 34 fest verbunden ist. Im Kreuzgelenk 340 ist der Antriebshebel 34 mit dem Ausgleichshebel 35 gelenkig verbunden, dessen eines Ende in der Führungsschiene 36 verschiebbar lagert. Die freien Enden des Antriebshebels 34 und des Ausgleichshebels 35 stehen über nicht dargestellte Befestigungselemente mit der Fensterscheibe in Verbindung. Der Verzahnungsbereich des Zahnsegmenthebels 33 steht mit einem Ritzel des Getriebes 32 im Eingriff, in dessen Gehäuse der dem magnetisierten Maßstab 1.9 zugeordnete Sensor 6 integriert ist. Wenn der Motor 31 in Betrieb genommen wird, schwenkt der Zahnsegmenthebel 33 um die Achse 330 und führt dabei den Maßstab 1.9 an dem Sensor 6 vorbei. Die generierten Signale werden von der Elektronikeinheit 60c bewertet und zur Steuerung der Verstellbewegung der Fensterscheibe herangezogen.

Um den sehr wichtigen oberen Schließbereich hinreichend sicher bewerten zu können, kann eine entsprechend höhere Auflösung des Maßstabs in diesem Bereich vorgesehen werden. Somit kann ein sensibel wirkender Einklemmschutz ebenso sichergestellt werden wie ein sogenannter Softanschlag beim Erreichen der Endlagen.

Für den Fall, daß eine vom Antrieb 31, 32 entfernt angeordnete elektronische Steuerungseinheit vorgesehen sein sollte, kann auch eine andere Plazierung des magnetisierten Maßstabes sinnvoll sein. Zum Beispiel könnte ein bogenförmiger Maßstab 1.10 auch koaxial zur Schwenkachse 330 angeordnet sein, dem ein an der Grundplatte 30 befestigter Sensor 6 zugeordnet ist (siehe Figur 15b).

Eine weitere Möglichkeit (siehe Figur 15c) besteht in der Verbindung eines Maßstabes 1.11 mit dem in der Führungsschiene 36 geführten Endes des Ausgleichshebels 35, wobei der Sensor 6 mit der Führungsschiene 36 oder einem anderen karosseriefesten Teil zu verbinden wäre. Es ist jedoch darauf hinzuweisen, daß der Maßstab 1.11 beim Durchfahren des gesamten Verstellweges der Fensterscheibe zweimal in der Führungsschiene 36 hin und her bewegt wird, so daß nur die obere oder untere Hälfte des Verstellweges eindeutig überwacht werden kann, es sei denn, es wird durch eine zusätzliche Information eine Aussage darüber zur Verfügung gestellt, ob sich die Verstellmechanik in der unteren oder oberen Hälfte des Verstellweges befindet.

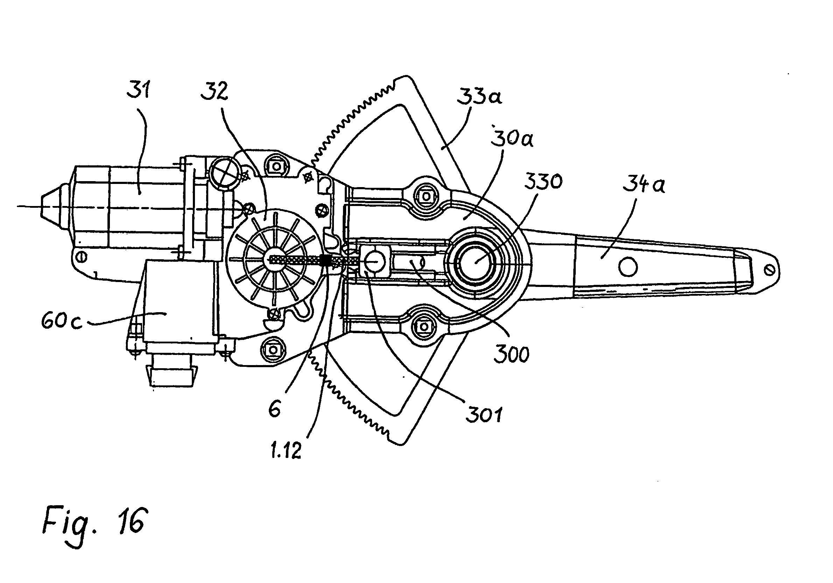

In der Darstellung von Figur 16 ist schematisch angedeutet, daß der Maßstab 1.12 über ein der Meßvorrichtung zugeordnetes Getriebe mit Getriebe 32 in Wirkverbindung steht mittels dessen eine synchrone Verschiebung von Fensterscheibe und Maßstab 1.12 gewährleistet wird. Dazu ist der Maßstab 1.12 an dem in der Kulisse 300 der Grundplatte 30a verschiebbaren Gleiter 301 befestigt. Der zugeordnete Sensor 6 ist in das Gehäuse des Getriebes 32 integriert; die Meßsignale werden in der elektronischen Steuerungseinrichtung 60c bewertet.

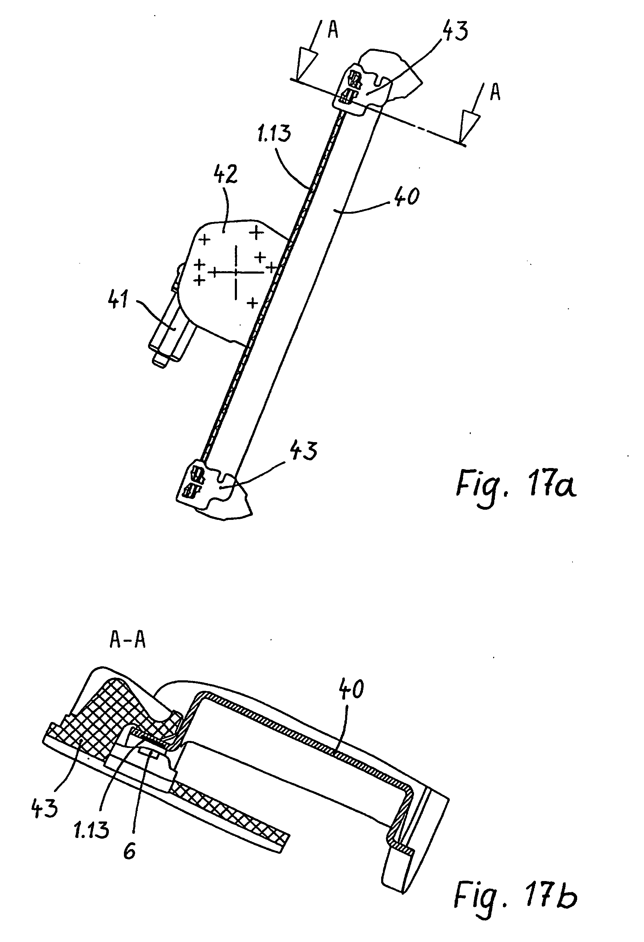

Aus der schematischen Darstellung von Figur 17a ist eine Führungsschiene 40 eines Seilfensterhebers ersichtlich, auf dem ein Mitnehmer 43 für eine Fensterscheibe verschiebbar lagert. Entlang der Führungsschiene 40 erstreckt sich erstreckt sich ein magnetisierter Maßstab 1.13, dem ein in den Mitnehmer 43 integrierter Sensor 6 zugeordnet ist (siehe auch Figur 17b). Die Weiterleitung der Sensorsignale an eine (nicht dargestellte) Steuerungselektronik kann über einen bewegbaren Kabelstrang oder durch eine geeignete Sendeeinrichtung drahtlos erfolgen. Zur Stromversorgung dieser in den Mitnehmer 43 integrierten Sendeeinrichtung können Schleifkontakte vorgesehen werden, die sich entlang der Führungsschiene 40 erstrecken und vorzugsweise über einen Steckkontakt mit einer Energiequelle verbunden sind, der der Kontaktierung der Motors 41 dient.

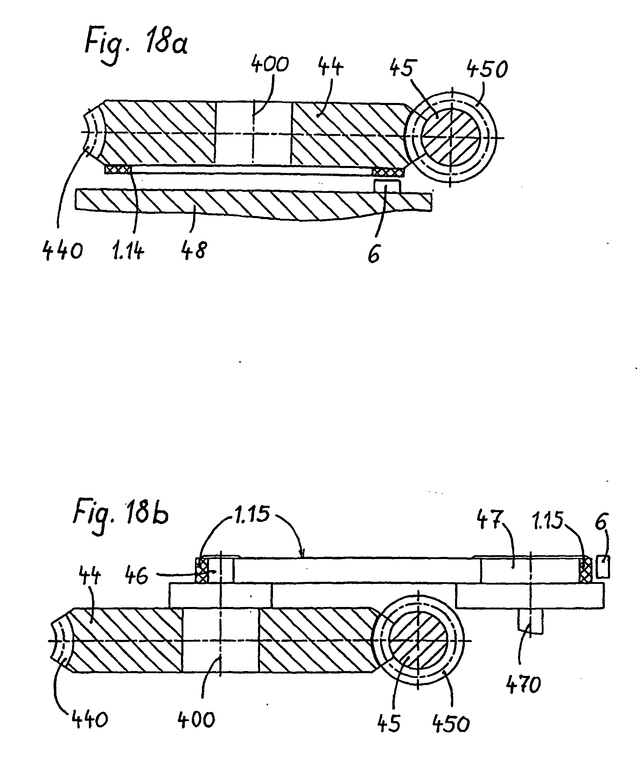

Figur 18a zeigt ein Schneckenrad 44, das mit einem ringförmig ausgebildeten Maßstab 1.14 ausgestattet, wobei der Maßstab 1.14 als separates Teil mit dem Schneckenrad 44 verbunden oder mittels Mehrkomponenten-Spritztechnologie einstückig an das Schneckenrad angeformt ist. Die Form des Maßstabes kann den gegebenen Erfordernissen weitestgehend angepaßt werden. Ebenso kann der magnetisierte Bereich vollständig in das Schneckenrad 44 integriert sein, so daß es keine seitlich überstehenden Bereiche gibt. Der zugeordnete Sensor 6 ist am Getriebegehäuse 48 oder dergleichen festgelegt.

Auch das Ausführungsbeispiel von Figur 18b weist ein Schnekkenradgetriebe mit einer in die Verzahnung 440 des Schnekkenrades 44 eingreifenden Schnecke 45 auf. Eine Rolle 46 mit vergleichsweise kleinem Durchmesser lagert auf der Achse 400 des Schneckenrades und dient der Umlenkung eines Maßstabes 1.15 in Form eines flexiblen, geschlossenen, umlaufenden Riemens oder dergleichen, der über eine auf der Achse 470 lagernden Rolle 47 geführt wird. In der Nähe der Achse 470 ist dem umlaufenden magnetisierten Riemen 1.15 ein vorzugsweise gehäusefester Sensor 6 zugeordnet. Aufgrund dessen, daß der Durchmesser der Rolle 46 sehr viel kleiner als der Durchmesser des Schneckenrades 44 ist, kann eine Vielzahl von Schneckenradumdrehungen vorgesehen werden bis der Riemen einen vollständigen Umlauf absolviert hat. Somit kann für einen derart vorgenommenen Verstellweg jede Position eindeutig zugeordnet werden.

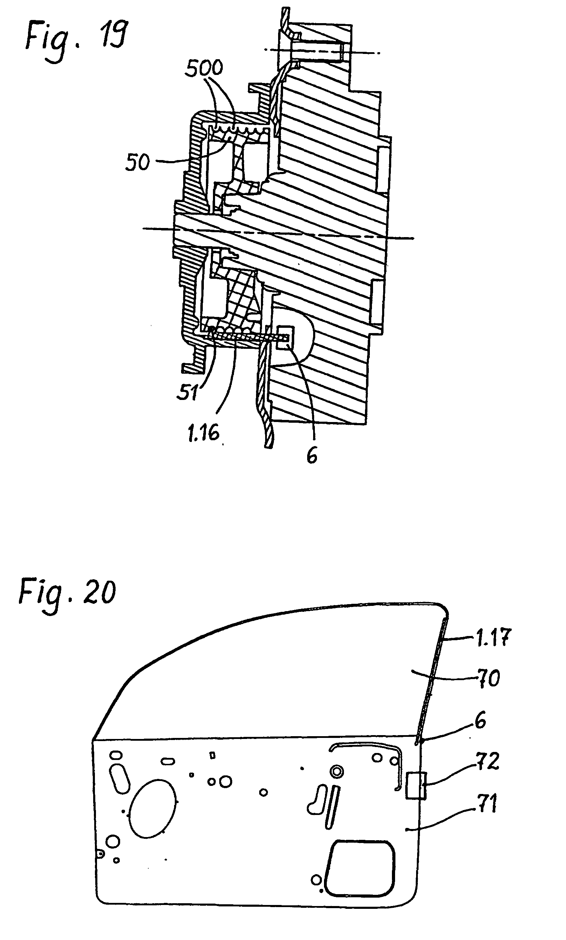

In Figur 19 ist schematisch ein Antrieb mit einer Seiltrommel 50 dargestellt, deren umlaufende schraubenförmige Seilrille 500 über einen Nocken 51 mit dem magnetisierten Maßstabes 1.16 in Eingriff steht. Bei einer Drehung der Seiltrommel 50 kommt es aufgrund der Steigung der schraubenförmig umlaufenden Seilrille 500 zu einer axialen Verschiebung des Maßstabes 1.16, die von einem Sensor 6 sensiert wird, der im Gehäuse der Antriebseinheit integriert ist. Unter Berücksichtigung des Seiltrommeldurchmesser läßt sich der vom Seil übertragene Verstellweg berechnen.

Zur Steuerung eines Fensterhebers läßt sich der magnetisierte Maßstab 1.17 auch an einer sich im wesentlichen in Verschieberichtung verlaufenden Kante einer Fensterscheibe 70 anordnen (siehe Figur 19). Der zugeordnete Sensor 6 wird in der Türkarosserie 71 oder einer elektronischen Steuerungseinrichtung plaziert. Der Vorteil dieser Variante liegt vor allem darin, daß sich das Setzungsverhalten der Verstellmechanik nicht auswirken kann.

Ein weiteres Anwendungsgebiet das Längenmeßsystem können Kraftfahrzeugtürschlösser 72 sein, um die Schließlage der Schließteile zu erkennen. Vorzugsweise sollte der Sensor in dem nichtbewegten Gehäuse angeordnet werden und der magnetisierte Maßstab an einem bewegten Schließteil oder an einem damit verbundenen Teil (z.B. Betätigungsgestänge) befestigt sein.

An dieser Stelle sei noch darauf hingewiesen, daß eine einstückige Integration des magnetisierten Maßstabes in ein Kunststoffteil in vielen Fällen unter Anwendung der Mehrkomponenten-Kunststoff-Spritztechnologie möglich ist, zum Beispiel in eine Kunststoff-Führungsschiene eines Fensterhebers, eines Abdeckblende für eine Sitzschiene oder ein Dekorelement. Denkbar ist aber auch, die Funktion des Maßstabes in die Kunststoffumspritzung einer Verzahnung zu integrieren oder daran anzuspritzen.

## Patentansprüche

1. Längenmeßsystem mit mindestens einem magnetischen Maßstab (1) und mindestens einem Magnetfeldsensor (6), der in Meßrichtung (7) relativ zu dem Maßstab (1) verschiebbar ist, wobei die Magnetisierung (2) des Maßstabes (1) eine Komponente in einer Ebene aufweist, die senkrecht auf der Meßrichtung (7) steht und wobei die Längsposition des Magnetfeldsensors (6) relativ zu dem Maßstab (1) aus der Richtung der Komponente der Magnetisierung (2) bestimmbar ist,
**dadurch gekennzeichnet,**
**daß** sich die Richtung dieser Komponente der Magnetisierung (2) entlang der Meßrichtung (7) derart ändert, daß jeder Längsposition des Magnetfeldsensors (6) eine Richtung der Komponente der Magnetisierung (2) innerhalb des Maßstabes (1) an dieser Längsposition zugeordnet ist, aus der die Längsposition bestimmbar ist.

2. Längenmeßsystem nach Anspruch 1, **dadurch gekennzeichnet, daß** sich der Winkel der Komponente der Magnetisierung (2) bezüglich einer Referenzlinie, die senkrecht auf der Meßrichtung (7) steht, mit dem Fortschreiten in Meßrichtung (7) kontinuierlich ändert.

3. Längenmeßsystem nach Anspruch 2, **dadurch gekennzeichnet, daß** sich der Winkel (3) der Komponente der Magnetisierung (2) linear ändert und mit einer konstanten Periodenlänge (4) entlang der Meßrichtung (7) variiert.

4. Längenmeßsystem nach Anspruch 1, **dadurch gekennzeichnet, daß** der Winkel (3) der Komponente der Magnetisierung (2) bezüglich einer Referenzlinie, die senkrecht auf der Meßrichtung (7) steht, in Bereichen (5) stufenweise mit dem Fortschreiten in Meßrichtung (7) eingestellt ist.

5. Längenmeßsystem nach Anspruch 1, **dadurch gekennzeichnet, daß** der Querschnitt (9) eines Maßstabes (1) homogen (2.1) magnetisiert ist.

6. Längenmeßsystem nach Anspruch 1, **dadurch gekennzeichnet, daß** der Querschnitt (9) eines Maßstabes (1) mehrpolig (2.2) magnetisiert ist.

7. Längenmeßsystem nach Anspruch 1, **dadurch gekennzeichnet, daß** der Querschnitt (9.1) des Maßstabes (1) rund ist.

8. Längenmeßsystem nach Anspruch 1, **dadurch gekennzeichnet, daß** der Querschnitt (9.2) des Maßstabs (1) einen nicht dauermagnetischen Kern (10) hat.

9. Längenmeßsystem nach Anspruch 8, **dadurch gekennzeichnet, daß** der Querschnitt (9.3) des Maßstabes (1) den nicht dauermagnetischen Kern (10) nicht umschließt.

10. Längenmeßsystem nach Anspruch 8 oder 9, **dadurch gekennzeichnet, daß** der nicht dauermagnetische Kern (10) weichmagnetisch ist.

11. Längenmeßsystem nach Anspruch 8, **dadurch gekennzeichnet, daß** der nicht dauermagnetische Kern (10) ein Profil (11) hat und so als Träger des Maßstabes (1) mit dem Querschnitt (9.4) geeignet ist.

12. Längenmeßsystem nach Anspruch 1, **dadurch gekennzeichnet, daß** der mindestens eine Magnetfeldsensor (6) ein magnetoresistiver Winkelsensor (12) ist.

13. Längenmeßsystem nach Anspruch 12, **dadurch gekennzeichnet, daß** an einem Maßstab (1) genau gegenüberliegend am Querschnitt (9) zwei gleiche magnetoresistive Winkelsensoren (12, 13) vorhanden sind, um Fehler aus einer seitlichen Verschiebung des Maßstabs (1) zu korrigieren.

14. Längenmeßsystem nach Anspruch 7, **dadurch gekennzeichnet, daß** der runde Maßstab (1) in Form einer regelmäßigen Schraubenlinie magnetisiert ist und ein magnetoresistiver Winkelsensor (14) entlang der Meßrichtung (16) periodische Signale abgibt.

15. Längenmeßsystem nach Anspruch 14, **dadurch gekennzeichnet, daß** die Magnetisierung über die gesamte Länge des Maßstabes (1) nur um 180 ° verdreht ist und so aus dem Signal des magnetoresistiven Winkelsensors (14) die Absolutposition ermittelbar ist.

16. Längenmeßsystem nach Anspruch 7, **dadurch gekennzeichnet, daß** der runde Maßstab (17) vom Anfang her in radialer Richtung mit ständig abnehmender Periodenlänge magnetisiert ist und ein Paar (18) magnetoresistive Winkelsensoren in einem Abstand angeordnet ist, der. der ersten Periodenlänge am Anfang des Maßstabes (17) entspricht, und daß die Position aus der Winkeldifferenz des Paares der magnetoresistiven Winkelsensoren ermittelbar ist, um Fehler durch eine spontane Drehung des Maßstabes (17) auszuschließen.

17. Längenmeßsystem nach Anspruch 16, **dadurch gekennzeichnet, daß** der Abstand des Paares (18) magnetoresistiver Winkelsensoren am Ende des Maßstabes (17) zwei Periodenlängen entspricht und daß so aus der Winkeldifferenz des Paares (18) magnetoresistiver Winkelsensoren die Position absolut ermittelbar ist.

18. Längenmeßsystem nach Anspruch 4, **dadurch gekennzeichnet, daß** den jeweiligen Richtungen der Magnetisierungen (2) in den Bereichen (5) jeweils ein Wert eines mehrstufigen Codes zugeordnet ist.

19. Längenmeßsystem nach Anspruch 18, **dadurch gekennzeichnet, daß** der mehrstufige Code vierwertig ist.

20. Längenmeßsystem nach Anspruch 18, **dadurch gekennzeichnet, daß** der mehrstufige Code ein Dezimalcode ist.

21. Längenmeßsystem nach Anspruch 18, **dadurch gekennzeichnet, daß** sich ein bestimmter Winkelbereich der Richtung der Magnetisierung (2), der keinem Codewert entspricht, in Sonderbereichen befindet, die in regelmäßigen Abständen vorhanden sind und so die Erkennung eines Wortanfangs ermöglicht ist.

22. Längenmeßsystem nach Anspruch 21, **dadurch gekennzeichnet, daß** sich der Winkel der Richtung der Magnetisierung (2) in dem Sonderbereich kontinuierlich mit der Position ändert.

23. Längenmeßsystem nach einem der Ansprüche 18 bis 22, **dadurch gekennzeichnet, daß** zur Codeerkennung die doppelte Anzahl der Stellen des Codes von magnetoresistiven Winkelsensoren vorhanden ist, deren Abstand der halben Länge der Bereiche (5) entspricht.

24. Längenmeßsystem nach Anspruch 1, **dadurch gekennzeichnet, daß** zwei parallele Maßstäbe (1) gleicher Länge mit unterschiedlicher Periodenlänge (4) und einer um eins verschiedenen Periodenzahl mit jeweils einem in Meßrichtung bei gleichem Wert befindlichen magnetoresistiven Winkelsensor vorhanden sind, so daß die Position aus den Winkeln der beiden magnetoresistiven Winkelsensoren absolut ermittelbar ist.

25. Verwendung des Längenmeßsystems nach wenigstens einem der Ansprüche 1 bis 24, **dadurch gekennzeichnet, daß** der Maßstab (1.1 - 1.17) oder der zugeordnete Sensor (6) mit der Verstellmechanik einer Verstelleinrichtung für ein Kraftfahrzeug in Wirkverbindung steht.

26. Verwendung nach Anspruch 25, **dadurch gekennzeichnet, daß** das Längenmeßsystem Bestandteil einer Sitzverstelleinrichtung ist, insbesondere einer Einrichtung zur Sitzlängsverstellung, Sitzhöhenverstellung, Sitzlehnenneigungsverstellung, Kopfstützen-höhenverstellung oder Sitzkissentiefenverstellung.

27. Verwendung nach Anspruch 26, **dadurch gekennzeichnet, daß** der Maßstab (1.1) mit einer am Fahrzeugboden festgelegten Führungsschiene (20a) einer Sitzlängsverstellung oder mit einem sonstigen fahrzeugbodenfesten Teil verbunden ist, wobei sich der Maßstab (1.1) im wesentlichen in Verschieberichtung des Sitzes erstreckt, und daß der Sensor (6) mit einem an der Oberschiene (20b) festgelegten Teil verbunden ist.

28. Verwendung nach Anspruch 26, **dadurch gekennzeichnet, daß** der Maßstab (1.2) an einem bezüglich des Fahrzeugbodens nicht höhenverstellbaren Teil, z.B. an der Oberschiene (20b) einer Einrichtung zur Sitzlängsverstellung, lagert und sich im wesentlichen vertikal erstreckt und daß der zugeordnete Sensor (6) am Sitzkissenträger (ST) festgelegt ist.

29. Verwendung nach Anspruch 26, **dadurch gekennzeichnet, daß** der Maßstab (1.3) mit einem schwenkbar gelagerten Hebel (21b) einer Sitzhöhen- oder Sitzneigungsverstellung verbunden ist und daß der zugeordnete Sensor (6) mit dem Teil (20b) direkt oder indirekt verbunden ist, an das mit dem Sensor (6) ausgerüstete Ende des schwenkbaren Hebels (21b) lagert.

30. Verwendung nach Anspruch 29, **dadurch gekennzeichnet, daß** der Maßstab (1.3) bezüglich der Schwenkachse des Hebels (21b) kreisbogenförmig ausgebildet ist.

31. Verwendung nach Anspruch 26, **dadurch gekennzeichnet, daß** der Maßstab (1.6) mit einem drehbar gelagerten Getriebeelement einer Einrichtung (22) zur Lehnenneigungsverstellung verbunden ist und daß der zugeordnete Sensor (6) mit einem getriebegehäusefesten Teil verbunden ist.

32. Verwendung nach Anspruch 26, **dadurch gekennzeichnet, daß** der Maßstab (1.6) mit einen lehnenfesten Teil und der zugeordnete Sensor (6) mit einem sitzuntergestellfesten Teil verbunden ist oder umgekehrt.

33. Verwendung nach Anspruch 31 oder 32, **dadurch gekennzeichnet, daß** der Maßstab (1.6) bezüglich der Lehnenschwenkachse kreisbogenförmig ausgebildet ist.

34. Verwendung nach Anspruch 26, **dadurch gekennzeichnet, daß** der Maßstab (1.7) mit der Oberschenkelauflage (23) einer Sitzkissentiefenverstellung verbunden ist und daß der zugeordnete Sensor (6) am Sitzkissenträger befestigt ist.

35. Verwendung nach Anspruch 26, **dadurch gekennzeichnet, daß** der Maßstab (1.8) mit dem Rückenlehnenträger (RT) und der zugeordnete Sensor (6) mit einem mit der Kopfstütze (K) festen Teil verbunden ist oder umgekehrt.

36. Verwendung nach Anspruch 35, **dadurch gekennzeichnet, daß** der Sensor (6) mit einem Getriebe (24b) in Verbindung steht, das entlang eines sich in Verstellrichtung erstreckenden Getriebeelementes (24a) bewegbar ist.

37. Verwendung nach Anspruch 26, **dadurch gekennzeichnet, daß** das Längenmeßsystem Bestandteil eine Vorrichtung zur Sitzbelegungserkennung und/oder zur Sensierung des Belegungsgewichts ist.

38. Verwendung nach Anspruch 37, **dadurch gekennzeichnet, daß** der Maßstab (1.4) an einem mit dem Sitzkissen (S) in Verbindung stehenden Teil befestigt ist und daß der zugeordnete Sensor (6) am Sitzkissenträger (ST) festgelegt ist.

39. Verwendung nach Anspruch 37, **dadurch gekennzeichnet, daß** der Maßstab (1.5) in einer Führungshülse (103a), an der der zugeordnete Sensor (6) befestigt ist, derart lagert, daß bei einer Sitzbelegung in Abhängigkeit von der Stärke der Belastung eine Verschiebung zwischen dem Maßstab (1.5) und dem Sensor (6) erzeugt wird.

40. Verwendung nach wenigstens einem der Ansprüche 25 bis 39, **dadurch gekennzeichnet, daß** der Sensor (6) direkter Bestandteil einer elektronischen Steuerungseinrichtung (60a - 60c) ist.

41. Verwendung nach Anspruch 25, **dadurch gekennzeichnet, daß** das Längenmeßsystem Bestandteil eines Fensterhebers ist.

42. Verwendung nach Anspruch 41, **dadurch gekennzeichnet, daß** sich der Maßstab (1.9) parallel zur Verzahnung des Zahnsegmenthebels (33) eines Armfensterhebers erstreckt und daß der zugeordnete Sensor (6) in die Antriebseinheit integriert ist.

43. Verwendung nach Anspruch 41, **dadurch gekennzeichnet, daß** sich der Maßstab (1.10) in der Nähe der Schwenkachse (330) des Zahnsegmenthebels (33) kreisbogenförmig erstreckt und daß der zugeordnete Sensor (6) an einem mit der Türkarosserie verbundenen Teil (30) befestigt ist.

44. Verwendung nach Anspruch 41, **dadurch gekennzeichnet, daß** der Maßstab (1.11) mit einem in der Führungsschiene (36) eines Kreuzarmfensterhebers geführten Gleiter verschiebbar verbunden ist und daß der zugeordnete Sensor (6) an einem mit der Türkarosserie verbundenen Teil befestigt ist.

45. Verwendung nach Anspruch 41, **dadurch gekennzeichnet, daß** der Maßstab (1.12) mittels eines der Meßvorrichtung zugeordnetes Getriebe, das Bestandteil einer Antriebseinheit eines Fensterhebers oder mit dieser gekoppelt ist, synchron mit der Fensterscheibe verstellbar ist und daß der zugeordnete Sensor (5) in die Antriebseinheit integriert ist.

46. Verwendung nach Anspruch 41, **dadurch gekennzeichnet, daß** sich der Maßstab (1.13) entlang der Führungsschiene (40) eines Seilfensterhebers erstreckt und daß der Sensor (6) in den mit der Fensterscheibe verbundenen Mitnehmer integriert ist.

47. Verwendung nach Anspruch 41, **dadurch gekennzeichnet, daß** der Maßstab (1.14) ringförmig ausgebildet und mit einer Seiltrommel (44) verbunden ist und daß der zugeordnete Sensor (6) am Getriebegehäuse (48) festgelegt ist.

48. Verwendung nach Anspruch 41, **dadurch gekennzeichnet, daß** der Maßstab (1.15) als ein geschlossenes umlaufendes Bad, Riemen oder dergleichen ausgebildet ist, der über eine Drehachse der Antriebseinheit antreibbar und einem gehäusefesten Sensor (6) zugeordnet ist.

49. Verwendung nach Anspruch 48, **dadurch gekennzeichnet, daß** der umlaufende Maßstab (1.15) über eine Untersetzung mit der Antriebseinheit derart gekoppelt ist, daß der Maßstab (1.15) beim Durchlaufen des Verstellweges einmal umläuft.

50. Verwendung nach Anspruch 41, **dadurch gekennzeichnet, daß** der Maßstab (1.16) einen Nocken (51) aufweist, der in die schraubenförmig umlaufende Seilrille einer Seiltrommel eingreift und den Maßstab (1.16) bei Drehung der Seiltrommel (50) verschiebt, und daß der Sensor (6) im Gehäuse der Antriebseinheit integriert ist.

51. Verwendung nach Anspruch 25, **dadurch gekennzeichnet, daß** der Maßstab (1.17) an der im wesentlichen vertikalen Kante einer Fensterscheibe (70) angeordnet und einem in der Türkarosserie (71) plazierten Sensor (6) zugeordnet ist.

52. Verwendung nach Anspruch 25, **dadurch gekennzeichnet, daß** der Maßstab zur Erkennung der Schließlage in einem Kraftfahrzeugtürschloß angeordnet ist.

53. Verwendung nach wenigstens einem der voranstehenden Ansprüche 25-52, **dadurch gekennzeichnet, daß** der Sensor (6) mit einer Einrichtung zur drahtlosen Signalübermittlung verbunden ist, die die Meßsignale an eine elektronische Steuerungseinrichtung sendet.

## Claims

1. Length measurement system with at least one magnetic measuring rod (1) and at least one magnetic field sensor (6) which is displaceable relative to the measuring rod (1) in the direction of measurement (7) wherein magnetization (2) of the measuring rod (1) has a component in a plane which is perpendicular to the direction of measurement (7) and wherein the longitudinal position of the magnetic field sensor (6) relative to the measuring rod (1) can be determined from the direction of the component of magnetization (2)
**characterised in that**
the direction of this component of magnetization (2) is varied along the direction of measurement (7) so that to each longitudinal position of the magnetic field sensor (6) is assigned a direction of the component of magnetization (2) inside the measuring rod (1) at this longitudinal position from which the longitudinal position can be determined.

2. Length measurement system according to claim 1 **characterised in that** the angle of the component of magnetization (2) relative to a reference line which is perpendicular to the direction of measurement (7) changes continuously as one advances in the direction of measurement (7).

3. Length measurement system according to claim 2 **characterised in that** the angle (3) of the component of magnetization (2) changes linearly and varies with a constant period length (4) along the direction of measurement (7).

4. Length measurement system according to claim 1 **characterised in that** the angle (3) of the component of magnetization (2) relative to a reference line which is perpendicular to the direction of measurement (7) is adjusted in areas (5) stepwise as one advances in the direction of measurement (7).

5. Length measurement system according to claim 1 **characterised in that** the magnetization of the cross-section (9) of a measuring rod (1) is homogeneous (2.1).

6. Length measurement system according to claim 1 **characterised in that** the magnetization of the cross-section (9) of a measuring rod (1) is multi-polar (2.2).

7. Length measurement system according to claim 1 **characterised in that** the cross-section (9.1) of the measuring rod (1) is circular.

8. Length measurement system according to claim 1 **characterised in that** the cross-section (9.2) of the measuring rod (1) has a non permanent magnetic core (10).

9. Length measurement system according to claim 8 **characterised in that** the cross-section (9.3) of the measuring rod (1) does not enclose the non permanent magnetic core (10).

10. Length measurement system according to claim 8 or 9 **characterised in that** the non permanent magnetic core (10) is soft magnetic.

11. Length measurement system according to claim 8 **characterised in that** the non permanent magnetic core (10) has a profile (11) and is thus suitable to support the measuring rod (1) having a cross-section (9.4).

12. Length measurement system according to claim 1 **characterised in that** the at least one magnetic field sensor (6) is a magnetoresistive angle sensor (12).

13. Length measurement system according to claim 12 **characterised in that** two identical magnetoresistive angle sensors (12, 13) are provided for one measuring rod (1) precisely opposite one another at the cross-section in order to correct errors resulting from lateral displacement of the measuring rod (1).

14. Length measurement system according to claim 7 **characterised in that** the circular measuring rod (1) is magnetized in the form of a regular helix and a magnetoresistive angle sensor (14) sends out periodic signals along the direction of measurement (16).

15. Length measurement system according to claim 14 **characterised in that** magnetization is only rotated by 180° over the entire length of the measuring rod (1) and the absolute position can thus be determined from the signal of the magnetoresistive angle sensor (14).

16. Length measurement system according to claim 7 **characterised in that** the circular measuring rod (17) is magnetized from the starting end in the radial direction with a constantly decreasing period length and a pair (18) of magnetoresistive angle sensors is mounted at a spacing corresponding to the first period length at the starting end of the measuring rod (17) and that the position can be determined from the angular difference between the pair of magnetoresistive angle sensors in order to eliminate errors through spontaneous rotation of the measuring rod (17).

17. Length measurement system according to claim 16 **characterised in that** the spacing of the pair (18) of magnetoresistive angle sensors at the end of the measuring rod (17) corresponds to two period lengths and that the position can be determined absolute from the angular difference between the pair (18) of magnetoresistive angle sensors.

18. Length measurement system according to claim 4 **characterised in that** each one value of a multi-valued code is assigned to the prevailing directions of magnetization (2) in the regions (5).

19. Length measurement system according to claim 18 **characterised in that** the multi-valued code is quadrivalent.

20. Length measurement system according to claim 18 **characterised in that** the multi-valued code is a decimal code.

21. Length measurement system according to claim 18 c**haracterised in that** a specific angular region of the direction of magnetization (2) which corresponds to no code value is located in special regions which are situated at regular intervals and thus it is possible to detect the beginning of a word.

22. Length measurement system according to claim 21 **characterised in that** the angle of the direction of magnetization (2) in the special region changes continuously with the position.

23. Length measurement system according to one of claims 18 to 22 **characterised in that** in order to detect the code there is double the number of settings of the code for magnetoresistive angle sensors whose spacing corresponds to half the length of the regions (5).

24. Length measurement system according to claim 1 **characterised in that** there are two parallel measuring rods (1) of uniform length with different period length (4) and a periodicity which is different by one, each with one magnetoresistive angle sensor located in the direction of measurement with the same value so that the position can be determined absolute from the angles of the two magnetoresistive angle sensors.

25. Use of the length measurement system according to at least one of claims 1 to 24 **characterised in that** the measuring rod (1.1- 1.17) or the associated sensor (6) is in active connection with an adjustment mechanism of an adjusting device for a motor vehicle.

26. Use according to claim 25 **characterised in that** the length measurement system is a constituent part of a seat adjustment device, more particularly a device for adjusting the length or height of the seat, or a device for adjusting the incline of a back rest or the height of a head restraint or the depth of a seat cushion.

27. Use according to claim 26 **characterised in that** the measuring rod (1.1) is connected to a guide rail (20a) of a horizontal seat adjustment device fixed on the vehicle floor or to another part fixed on the vehicle floor wherein the measuring rod (1.1) extends substantially in the direction of displacement of the seat, and that the sensor (6) is connected to a part fixed on the top rail (20b).

28. Use according to claim 26 **characterised in that** the measuring rod (1.2) is mounted on a part which is not vertically displaceable relative to the vehicle floor, e.g. on the top rail (20b) of a device for adjusting the horizontal position of the seat, and extends substantially vertically and that the associated sensor (6) is fixed on the seat cushion support (ST).

29. Use according to claim 26 **characterised in that** the measuring rod (1.3) is connected to a swivel mounted lever (21b) of a seat height or seat incline adjuster and that the associated sensor (6) is connected directly or indirectly to the part (20b) on which the end of the swivel lever (21b) fitted with the sensor (6) is mounted.

30. Use according to claim 29 **characterised in that** the measuring rod (1.3) is formed in a circular arc relative to the swivel axis of the lever (21b).

31. Use according to claim 26 **characterised in that** the measuring rod (1.6) is connected to a rotatably mounted gear element of a device (22) for adjusting the incline of the backrest and that the associated sensor (6) is connected to a part fixed on the gear housing.

32. Use according to claim 26 **characterised in that** the measuring rod (1.6) is connected to a part fixed on the backrest and the associated sensor (6) is connected to a part fixed on the underneath frame of the seat, or vice versa.

33. Use according to claim 31 or 32 **characterised in that** the measuring rod (1.6) is formed in a circular arc relative to the swivel axis of the backrest.

34. Use according to claim 26 **characterised in that** the measuring rod (1.7) is connected to the thigh support (23) of a seat cushion depth adjuster and that the associated sensor (6) is fixed on the seat cushion support.

35. Use according to claim 26 **characterised in that** the measuring rod (1.8) is connected to the backrest support (RT) and the associated sensor (6) is connected to a part fixed with the head restraint (K), or vice versa.

36. Use according to claim 35 **characterised in that** the sensor (6) is connected to a gearing (24b) which is movable along a gearing element (24a) which extends in the direction of adjustment.

37. Use according to claim 26 **characterised in that** the length measurement system is a constituent part of a device for detecting occupancy of the seat and/or for sensing the occupancy weight.

38. Use according to claim 37 **characterised in that** the measuring rod (1.4) is fixed on a part connected to the cushion (S) and that the associated sensor (6) is fixed on the seat cushion support (ST).

39. Use according to claim 37 **characterised in that** the measuring rod (1.5) is mounted in a guide sleeve (103a) on which the associated sensor (6) is fixed, so that when the seat is occupied there is a displacement between the measuring rod (1.5) and the sensor (6) which is dependent on the weight of the load.

40. Use according to at least one of claims 25 to 39
**characterised in that** the sensor (6) is a direct constituent part of an electronic control device (60a - 60c).

41. Use according to claim 25 **characterised in that** the length measurement system is a constituent part of a window lifter.

42. Use according to claim 41 **characterised in that** the measuring rod (1.9) extends parallel to the teeth of the toothed segment lever (33) of an arm window lifter and that the associated sensor (6) is integrated in the drive unit.

43. Use according to claim 41 **characterised in that** the measuring rod (1.10) extends in a circular arc close to the swivel axis (330) of the toothed segment lever (33) and that the associated sensor (6) is fixed on a part (30) connected to the door body.

44. Use according to claim 41 **characterised in that** the measuring rod (1.11) is connected displaceable to a slider guided in the guide rail (36) of a cross-arm window lifter and that the associated sensor (6) is fixed on a part connected to the door body.

45. Use according to claim 41 **characterised in that** the measuring rod (1.12) is displaceable in synchronisation with the window pane by means of gearing associated with the measuring device and forming a constituent part of a drive unit of a window lifter or coupled to same, and that the associated sensor (5) is integrated in the drive unit.

46. Use according to claim 41 **characterised in that** the measuring rod (1.13) extends along the guide rail (40) of a cable window lifter and that the sensor (6) is integrated in the follower which is connected to the window pane.

47. Use according to claim 41 **characterised in that** the measuring rod (1.14) is formed circular and is connected to a cable drum (44) and that the associated sensor (6) is fixed on the gear housing (48).

48. Use according to claim 41 **characterised in that** the measuring rod (1.15) is formed as a closed circumferential band, belt or similar which can be driven through a rotational axis of the drive unit and which is associated with a sensor (6) fixed on the housing.

49. Use according to claim 48 **characterised in that** the circumferential measuring rod (1.15) is coupled to the drive unit through reduction gearing so that the measuring rod (1.15) revolves once when running through the adjustment path.

50. Use according to claim 41 **characterised in that** the measuring rod (1.16) has a cam (51) which engages in the helical cable groove of a cable drum and displaces the measuring rod (1.16) when the cable drum (50) rotates, and that the sensor (6) is integrated in the housing of the drive unit.

51. Use according to claim 25 **characterised in that** the measuring rod (1.17) is mounted on the substantially vertical edge of a window pane (70) and is associated with a sensor (6) which is situated in the door body (71).

52. Use according to claim 25 **characterised in that** the measuring rod is mounted in a vehicle door lock in order to detect the closed position.

53. Use according to at least one of the preceding claims, **characterised in that** the sensor (6) is connected to a device for wireless signal transmission which sends the measurement signals to an electronic control device.

## Revendications

1. Système de mesure de longueur comprenant au moins une barre de mesure (1) magnétique et au moins un capteur de champ magnétique (6), qui peut être déplacé dans la direction de mesure (7) par rapport à la barre de mesure (1), la magnétisation (2) de la barre de mesure (1) présentant une composante dans un plan qui est perpendiculaire à la direction de mesure (7) et la position longitudinale du capteur de champ magnétique (6) par rapport à la barre de mesure (1) pouvant être déterminée à partir de la direction de la composante de la magnétisation (2),
**caractérisé en ce que**
la direction de cette composante de la magnétisation (2) change le long de la direction de mesure (7) de telle sorte qu'à chaque position longitudinale du capteur de champ magnétique (6) est associée une direction de la composante de la magnétisation (2) à l'intérieur de la barre de mesure (1) en cette position longitudinale, à partir de laquelle la position longitudinale peut être déterminée.

2. Système de mesure de longueur selon la revendication 1, **caractérisé en ce que** l'angle de la composante de la magnétisation (2) par rapport à une ligne de référence, qui est perpendiculaire à la direction de mesure (7), change de façon continue avec la progression dans la direction de mesure (7).

3. Système de mesure de longueur selon la revendication 2, **caractérisé en ce que** l'angle (3) de la composante de la magnétisation (2) change de façon linéaire et varie avec une longueur de période (4) constante le long de la direction de mesure (7).

4. Système de mesure de longueur selon la revendication 1, **caractérisé en ce que** l'angle (3) de la composante de la magnétisation (2) par rapport à une ligne de référence, qui est perpendiculaire à la direction de mesure (7) est réglé graduellement dans des zones (5) avec la progression dans la direction de mesure (7).

5. Système de mesure de longueur selon la revendication 1, **caractérisé en ce que** la section (9) d'une barre de mesure (1) est magnétisée de façon homogène (2.1).

6. Système de mesure de longueur selon la revendication 1, **caractérisé en ce que** la section (9) d'une barre de mesure (1) est magnétisée sur plusieurs pôles (2.2).

7. Système de mesure de longueur selon la revendication 1, **caractérisé en ce que** la section (9.1) de la barre de mesure (1) est ronde.

8. Système de mesure de longueur selon la revendication 1, **caractérisé en ce que** la section (9.2) de la barre de mesure (1) a un noyau (10) à aimantation non permanente.

9. Système de mesure de longueur selon la revendication 8, **caractérisé en ce que** la section (9.3) de la barre de mesure (1) n'entoure pas le noyau (10) à aimantation non permanente.

10. Système de mesure de longueur selon la revendication 8 ou 9, **caractérisé en ce que** le noyau (10) à aimantation non permanente est magnétique doux.

11. Système de mesure de longueur selon la revendication 8, **caractérisé en ce que** le noyau (10) à aimantation non permanente a un profil (11) et convient ainsi comme support de la barre de mesure (1) avec la section (9.4).

12. Système de mesure de longueur selon la revendication 1, **caractérisé en ce que** le au moins un capteur de champ magnétique (6) est un capteur d'angle (12) magnétorésistif.

13. Système de mesure de longueur selon la revendication 12, **caractérisé en ce que** deux capteurs d'angle (12, 13) magnétorésistifs et identiques sont présents sur une barre de mesure (1) exactement en face l'un de l'autre selon la section (9), afin de corriger des erreurs provenant d'un décalage latéral de la barre de mesure (1).

14. Système de mesure de longueur selon la revendication 7, **caractérisé en ce que** la barre de mesure (1) ronde est magnétisée sous la forme d'une ligne hélicoïdale régulière et un capteur d'angle (14) magnétorésistif émet des signaux périodiques le long de la direction de mesure (16).

15. Système de mesure de longueur selon la revendication 14, **caractérisé en ce que** la magnétisation est tournée seulement de 180° sur toute la longueur de la barre de mesure (1) et la position absolue peut être déterminée ainsi à partir du signal du capteur d'angle (14) magnétorésistif.

16. Système de mesure de longueur selon la revendication 7, **caractérisé en ce que** la barre de mesure (17) ronde est magnétisée à partir du début dans la direction radiale avec une longueur de période décroissante de façon régulière et une paire (18) de capteurs d'angle magnétorésistifs est disposée à une distance qui correspond à la première longueur de période au début de la barre de mesure (17), et **en ce que** la position peut être déterminée à partir de la différence d'angle de la paire des capteurs d'angle magnétorésistifs, afin d'exclure des erreurs dues à une rotation spontanée de la barre de mesure (17).

17. Système de mesure de longueur selon la revendication 16, **caractérisé en ce que** l'espacement de la paire (18) de capteurs d'angle magnétorésistifs à la fin de la barre de mesure (17) correspond à deux longueurs de période et qu'ainsi la position peut être déterminée de façon absolue à partir de la différence d'angle de la paire (18) de capteurs d'angle magnétorésistifs.

18. Système de mesure de longueur selon la revendication 4, **caractérisé en ce que** respectivement une valeur d'un code à plusieurs niveaux est attribuée à chacune des directions des magnétisations (2) dans chacune des zones (5).

19. Système de mesure de longueur selon la revendication 18, **caractérisé en ce que** le code à plusieurs niveaux est tétravalent.

20. Système de mesure de longueur selon la revendication 18, **caractérisé en ce que** le code à plusieurs niveaux est un code décimal.

21. Système de mesure de longueur selon la revendication 18, **caractérisé en ce qu'**une zone d'angle définie de la direction de la magnétisation (2), qui ne correspond pas à une valeur de code, se trouve dans des zones particulières qui sont présentes à des intervalles réguliers et **en ce que** l'identification d'un début de mot est ainsi rendue possible.

22. Système de mesure de longueur selon la revendication 21, **caractérisé en ce que** l'angle de la direction de la magnétisation (2) dans la zone particulière change de façon continue avec la position.

23. Système de mesure de longueur selon l'une quelconque des revendications 18 à 22, **caractérisé en ce que**, pour l'identification du code, le nombre des positions du code est le double de celui de capteurs d'angle magnétorésistifs, dont l'espacement correspond à la demi-longueur des zones (5).

24. Système de mesure de longueur selon la revendication 1, **caractérisé en ce que** deux barres de mesure (1) parallèles de même longueur avec une longueur de période (4) différente et un nombre de périodes différent de 1 sont présentes avec respectivement un capteur d'angle magnétorésistif se trouvant dans la direction de mesure pour une valeur identique, de sorte que la position peut être déterminée de façon absolue à partir des angles de deux capteurs d'angle magnétorésistifs.

25. Utilisation du système de mesure de longueur selon au moins l'une quelconque des revendications 1 à 24, **caractérisée en ce que** la barre de mesure (1.1 - 1.17) ou le capteur (6) associé est en liaison active avec le mécanisme de réglage d'un système de réglage pour un véhicule automobile.

26. Utilisation selon la revendication 25, **caractérisée en ce que** le système de mesure de longueur est un composant d'un appareil de réglage de siège, en particulier d'un appareil pour le réglage longitudinal du siège, le réglage de la hauteur du siège, le réglage de l'inclinaison du siège, le réglage de la hauteur de l'appuie-tête ou le réglage de la profondeur du coussin de siège.

27. Utilisation selon la revendication 26, **caractérisée en ce que** la barre de mesure (1.1) est reliée à un rail de guidage (20a), fixé sur le sol du véhicule, d'un réglage longitudinal du siège ou à une autre partie fixée solidaire du plancher du véhicule, la barre de mesure (1.1) s'étendant sensiblement dans la direction de déplacement du siège, et **en ce que** le capteur (6) est relié à une partie fixée sur le rail supérieur (20b).

28. Utilisation selon la revendication 26, **caractérisée en ce que** la barre de mesure (1.2) est montée sur une partie non réglable en hauteur par rapport au plancher du véhicule, par exemple sur le rail supérieur (20b) d'un appareil pour le réglage longitudinal du siège et s'étend sensiblement verticalement et **en ce que** le capteur (6) associé est fixé sur le support de coussin de siège (ST).

29. Utilisation selon la revendication 26, **caractérisée en ce que** la barre de mesure (1.3) est reliée à un levier (21b) logé de façon basculante d'un réglage de hauteur de siège ou d'inclinaison de siège et **en ce que** le capteur (6) associé est relié directement ou indirectement à la partie (20b) sur laquelle l'extrémité, équipée du capteur (6), du levier (21b) basculant est logée.

30. Utilisation selon la revendication 29, **caractérisée en ce que** la barre de mesure (1.3) est conçue en forme d'arc de cercle par rapport à l'axe de pivotement du levier (21b).

31. Utilisation selon la revendication 26, **caractérisée en ce que** la barre de mesure (1.6) est reliée à un élément d'engrenage, logé de façon pivotante, d'un appareil (22) pour le réglage de l'inclinaison du dossier et **en ce que** le facteur (6) associé est relié à une partie solidaire du boîtier d'engrenage.

32. Utilisation selon la revendication 26, **caractérisée en ce que** la barre de mesure (1.6) est reliée à une partie solidaire du dossier et le capteur (6) associé à une partie solidaire du châssis du siège ou inversement.

33. Utilisation selon la revendication 31 ou 32, **caractérisée en ce que** la barre de mesure (1.6) est conçue en forme d'arc de cercle par rapport à l'axe de pivotement du dossier.

34. Utilisation selon la revendication 26, **caractérisée en ce que** la barre de mesure (1.7) est reliée au support de branche supérieure (23) d'un réglage de profondeur de coussin de siège et **en ce que** le capteur (6) associé est fixé sur le support du coussin de siège.

35. Utilisation selon la revendication 26, **caractérisée en ce que** la barre de mesure (1.8) est reliée au support de dossier (RT) et le capteur (6) associé à une partie fixée à l'appuie-tête (K) ou inversement.

36. Utilisation selon la revendication 35, **caractérisée en ce que** le capteur (6) est en liaison avec un engrenage (24b) qui peut être déplacé le long d'un élément d'engrenage (24a) s'étendant dans la direction de réglage.

37. Utilisation selon la revendication 26, **caractérisée en ce que** le système de mesure de longueur fait partie d'un dispositif pour l'identification de l'occupation du siège et/ou pour la détection par capteur du poids d'occupation.

38. Utilisation selon la revendication 37, **caractérisée en ce que** la barre de mesure (1.4) est fixée sur une partie reliée avec le coussin de siège (S) et **en ce que** le capteur (6) associé est fixé sur le support du coussin de siège (ST).

39. Utilisation selon la revendication 37, **caractérisée en ce que** la barre de mesure (1.5) est logée dans une douille de guidage (103a), sur laquelle le capteur (6) associé est fixé, de telle sorte que, avec une occupation de siège, un déplacement entre la barre de mesure (1.5) et le capteur (6) est généré en fonction de l'intensité de la charge.

40. Utilisation selon au moins l'une quelconque des revendications 25 à 39, **caractérisée en ce que** le capteur (6) est un élément direct d'un appareil de commande (60a - 60c) électronique.

41. Utilisation selon la revendication 25, **caractérisée en ce que** le système de mesure de longueur est un élément d'un lève-vitre.

42. Utilisation selon la revendication 41, **caractérisée en ce que** la barre de mesure (1.9) s'étend parallèlement à la denture du levier à segment cranté (33) d'un lève-vitre à bras et **en ce que** le capteur (6) associé est intégré dans l'unité d'entraînement.

43. Utilisation selon la revendication 41, **caractérisée en ce que** la barre de mesure (1.10) s'étend, à proximité de l'axe de pivotement (330) du levier à segment cranté (33), avec une forme d'arc de cercle et **en ce que** le capteur (6) associé est fixé sur une partie (30) reliée à la carrosserie de porte.

44. Utilisation selon la revendication 41, **caractérisée en ce que** la barre de mesure (1.11) est reliée de façon coulissante à une glissière guidée dans le rail de guidage (36) d'un lève-vitre à bras croisé et **en ce que** le capteur (6) associé est fixé sur une partie reliée à la carrosserie de porte.

45. Utilisation selon la revendication 41, **caractérisée en ce que** la barre de mesure (1.12) peut être réglée de façon synchrone avec la vitre de fenêtre au moyen d'un engrenage associé au dispositif de mesure, et qui fait partie d'une unité d'entraînement d'un lève-vitre ou est couplé avec celle-ci, et **en ce que** le capteur (5) associé est intégré dans l'unité d'entraînement.

46. Utilisation selon la revendication 41, **caractérisée en ce que** la barre de mesure (1.13) s'étend le long du rail de guidage (40) d'un lève-vitre à câble et **en ce que** le capteur (6) est intégré dans l'entraîneur relié à la vitre.

47. Utilisation selon la revendication 41, **caractérisée en ce que** la barre de mesure (1.14) est conçue avec une forme annulaire et est reliée à un tambour de câble (44) et **en ce que** le capteur (6) associé est fixé sur le boîtier d'engrenage (48).

48. Utilisation selon la revendication 41, **caractérisée en ce que** la barre de mesure (1.15) est conçue comme une cuve, une courroie ou similaire périphérique et fermée, qui peut être entraînée au moyen d'un axe de rotation de l'unité d'entraînement et est associée à un capteur (6) solidaire du boîtier.

49. Utilisation selon la revendication 48, **caractérisée en ce que** la barre de mesure (1.15) périphérique est couplée à l'unité d'entraînement au moyen d'une démultiplication, et **en ce que** la barre de mesure (1.15) tourne une fois lors du parcours de la course de déplacement.

50. Utilisation selon la revendication 41, **caractérisée en ce que** la barre de mesure (1.16) présente une came (51) qui s'engage dans la gorge de poulie, tournant à la façon d'une hélice, d'un tambour de câble et déplace la barre de mesure (1.16) en cas de rotation du tambour de câble (50), et **en ce que** le capteur (6) est intégré dans le boîtier de l'unité d'entraînement.

51. Utilisation selon la revendication 25, **caractérisée en ce que** la barre de mesure (1.17) est disposée sur l'arête sensiblement verticale d'une vitre (70) et est associée à un capteur (6) placé sur la carrosserie de porte (71).

52. Utilisation selon la revendication 25, **caractérisée en ce que** la barre de mesure pour l'identification de la position de fermeture est disposée sur une serrure de porte de véhicule automobile.

53. Utilisation selon au moins l'une quelconque des revendications 25 à 52 précédentes, **caractérisée en ce que** le capteur (6) est relié à un appareil de transmission sans fil de signaux, qui envoie les signaux de mesure à un appareil de commande électronique.
